(19) Europäisches Patentamt / European Patent Office / Office européen des brevets

(11) **EP 4 509 483 B1**

(12) **EUROPÄISCHE PATENTSCHRIFT**

(45) Veröffentlichungstag und Bekanntmachung des Hinweises auf die Patenterteilung:
**09.07.2025 Patentblatt 2025/28**

(21) Anmeldenummer: **23192049.7**

(22) Anmeldetag: **18.08.2023**

(51) Internationale Patentklassifikation (IPC):
**C04B 33/30** (2006.01)      **C04B 33/32** (2006.01)
**C04B 33/34** (2006.01)      **F27D 1/16** (2006.01)

(52) Gemeinsame Patentklassifikation (CPC):
**C04B 33/34; C04B 33/30; C04B 33/32;**
C04B 2235/3215; C04B 2235/3217;
C04B 2235/3262; C04B 2235/5427;
C04B 2235/6562; C04B 2235/6565;
C04B 2235/6567; C04B 2235/667; C04B 2235/9623

(54) **VERFAHREN ZUR HERSTELLUNG EINES GEBRANNTEN GROBKERAMISCHEN FORMKÖRPERS UNTER VERWENDUNG VON ELEKTROMAGNETISCHER STRAHLUNG MIT EINER FREQUENZ VON 300 MHZ BIS 300 GHZ**

METHOD FOR PRODUCING A FIRED COARSE CERAMIC MOULDED BODY USING ELECTROMAGNETIC RADIATION HAVING A FREQUENCY OF 300 MHZ TO 300 GHZ

PROCÉDÉ DE FABRICATION D'UN CORPS MOULÉ EN CÉRAMIQUE GROSSIÈRE CUITE UTILISANT UN RAYONNEMENT ÉLECTROMAGNÉTIQUE DE FRÉQUENCE DE 300 MHZ À 300 GHZ

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**

(43) Veröffentlichungstag der Anmeldung:
**19.02.2025 Patentblatt 2025/08**

(73) Patentinhaber: **ERLUS AKTIENGESELLSCHAFT**
**84088 Neufahrn (DE)**

(72) Erfinder:
- **ACKERHANS, Carsten**
  **84066 Mallersdorf-Pfaffenberg (DE)**
- **GRAU, Rüdiger**
  **84036 Landshut (DE)**
- **KREUPL, Franz**
  **80802 München (DE)**
- **STOLL, Alexander Josef**
  **85354 Freising (DE)**
- **WÄHLER, Tobias**
  **90587 Veitsbronn (DE)**

(74) Vertreter: **Louis Pöhlau Lohrentz**
**Patentanwälte**
**Postfach 30 55**
**90014 Nürnberg (DE)**

(56) Entgegenhaltungen:
EP-A1- 4 235 073        CN-A- 107 746 276
CN-A- 108 658 578       CN-A- 112 759 367
US-A1- 2007 023 971     US-A1- 2009 079 101
US-A1- 2014 127 430     US-A1- 2017 313 626

- **ROMUALDO R MENEZES ET AL: "Microwave Fast Sintering of Ceramic Materials", SINTERING OF CERAMICS - NEW EMERGING TECHNIQUES, 2 March 2012 (2012-03-02), XP055398118, ISBN: 978-953-51-0017-1, Retrieved from the Internet <URL:https://www.intechopen.com/books/sintering-of-ceramics-new-emerging-techniques/-microwave-fast-sintering-of-ceramic-materials> [retrieved on 20170811], DOI: 10.5772/34181**

**Beschreibung**

Die vorliegende Erfindung betrifft ein Verfahren zur Herstellung eines gebrannten grobkeramischen Formkörpers unter Verwendung von elektromagnetischer Strahlung mit einer Frequenz von 300 MHz bis 300 GHz.

Grobkeramische Formkörper, beispielsweise in Form von Dachziegeln, Fassadenplatten, Klinkersteinen oder Ziegelsteinen, sind im Stand der Technik bekannt und werden im Allgemeinen aus einer Tonmineralpartikel enthaltenden Formmasse hergestellt. Zunächst wird dabei ein Formkörpergrünling umfassend Tonmineralpartikel bereitgestellt. Anschließend wird der Formkörpergrünling optional getrocknet, wobei ein zumindest teilweise getrockneter Formkörpergrünling erhalten wird. Nachfolgend werden der Formkörpergrünling und/oder der zumindest teilweise getrocknete Formkörpergrünling gebrannt. Hierdurch wird ein gebrannter grobkeramischer Formkörper erhalten.

Aus der DE 3918746 A1 ist bekannt, dass sich Tunnelöfen zum Brennen von Ziegeln durchgesetzt haben. Diese Tunnelöfen besitzen einen durchgehenden Behandlungskanal in Form eines Tunnels, wobei sich im Behandlungskanal zwischen Ofeneinfahrt und Ofenausfahrt eine Aufheizzone, eine Brennzone und eine Kühlzone befinden. Die zu brennenden Gegenstände werden auf Wagen mit feuerfester Plattform und Dichtung von der Ofeneinfahrt zur Ofenausfahrt transportiert. Hierbei wird in der Brennzone durch Energiezufuhr das für den Ablauf des Verfahrens notwendige Temperaturniveau hergestellt. Im Gegenstrom zur Transportrichtung der Gegenstände wird ein an der Ofenausfahrt eingeblasener oder eingesaugter Luftstrom durch den Behandlungskanal hindurchgeleitet, der einen Teil der Verbrennungsluft liefert und in der Brennzone in einen Rauchgasstrom übergeht.

Die DE 19516205 A1 beschreibt eine Anlage zum Trocknen und Brennen von Formkörpergrünlingen, wie Ziegel, Dachpfannen oder dergleichen. Diese Anlage besteht aus einem Tunneltrockner und einem Tunnelofen sowie einer durch dieselben führenden Transportmittel-Umfahrt und Gleisanlage. Dem Tunneltrockner und dem Tunnelofen ist eine einzige gemeinsame Transportmittel-Rückführbahn zugeordnet.

Dokument CN112759367 zeigt die Herstellung eines Klinkersteins, ausgehende von ungebranntem Ton, mittels Mikrowellensinterung. Es wird eine Welle von 2.45 GHz benutzt.

Wie vorstehend beschrieben, wird für konventionelles Erwärmen bei der Herstellung von gebrannten grobkeramischen Formkörpern typischerweise Strahlungs- und Konvektionswärme aus einer Gas- oder elektrischen Widerstandsheizung in Tunnelöfen und -trocknern verwendet. Die Strahlungswärme wird über die Randbereiche, insbesondere die Oberfläche, des Formkörpergrünlings aufgenommen, wobei sich das Kernmaterial des Formkörpergrünlings in Abhängigkeit der Wärmeleitfähigkeit des verwendeten Materials langsamer erwärmt. Aufgrund einer geringen Wärmeleitfähigkeit der Materialien, die üblicherweise zur Herstellung gebrannter grobkeramischer Formkörper verwendet werden, wird die Wärmeenergie nur langsam von der Oberfläche in das Kernmaterial des zu erwärmenden Formkörpergrünlings übertragen.

Mit anderen Worten handelt es sich bei konventioneller Erwärmung um einen Wärmeeintrag, der überwiegend durch Strahlung und/oder Konvektion auf die Oberfläche des zu erwärmenden Formkörpergrünlings wirkt, gefolgt von einer Leitung der Wärme von der Oberfläche in das Innere, vorzugsweise in das Kernmaterial, des Formkörpergrünlings. Wenn sich ein zu großer Temperaturunterschied zwischen Kernmaterial und den Randbereichen, insbesondere der Oberfläche, ausbildet, können Verformungen des Formkörpergrünlings, aber auch innere Risse und äußere Risse auftreten. Schnelles Trocknen und/oder Brennen verschärft dieses Problem des Temperaturunterschieds aufgrund der geringen Wärmeleitung und erhöht letztendlich die Rissbildung noch weiter. Somit führt die Nutzung eines konventionellen Verfahrens typischerweise zu thermischen Differenzen innerhalb des zu trocknenden und/oder zu brennenden Formkörpergrünlings.

Des Weiteren tritt bei der Verwendung von konventionellen Verfahren der Nachteil beim Trocknen auf, dass sich die Durchlässigkeit von bereits getrockneten Schichten an der Oberfläche für Feuchtigkeit, bspw. Wasser bzw. Wasserdampf verringert. Bei der Trocknung kann es zu einer Volumenschrumpfung des Formkörpergrünlings kommen, die zu einer erhöhten Rissbildung führen kann. Da die Volumenänderung beim Trocknen in den Randbereichen stärker als im Kernmaterial ist, wird eine Rissbildung begünstigt. Um die Rissbildung gering zu halten, wird daher die konventionelle Trocknung sehr langsam durchgeführt, damit der zu trocknende Formkörpergrünling ein möglichst weitgehend homogenes Temperaturprofil, einen damit verbundenen homogenen Feuchtegehalt und eine gleichmäßige Volumenschrumpfung aufweist. Daraus ergeben sich Trocknungszeiten von beispielsweise 20 h bis 70 h für Formkörpergrünlinge aus denen grobkeramische Formkörper erhalten werden sollen.

Des Weiteren kann beim eigentlichen Brennvorgang ein Temperaturunterschied zwischen Randbereich und Kernmaterial auftreten, der beispielsweise zu ungleichmäßigen Sintervorgängen im Randbereich und dem Kernmaterial führt. Insbesondere in Randbereichen können dabei während des Brennvorgangs Sinterbrücken zwischen dort vorliegenden Tonmineralpartikeln ausgebildet werden, wobei im Kernmaterial aufgrund der verzögerten Erwärmung noch keine oder erst wenige Sinterprozesse stattfinden. Die ungleichmäßig verteilten Sinterbrücken können nach dem Aushärten oder nach dem Aushärten und Abkühlen, des gebrannten grobkeramischen Formkörpers zu heterogenen mechanischen und strukturellen Eigenschaften im gebrannten grobkeramischen Formkörper führen, wodurch innere Spannungen erzeugt werden können.

Bei konventionellen Öfen ist es außerdem notwendig, das den Formkörpergrünling umgebende Gasvolumen und somit die vollständige Brennkammer des Ofens zu erwärmen. Bis der Ofen vollständig auf Betriebstemperatur gebracht wird, vergeht jedoch viel Zeit, so dass es typischerweise wirtschaftlicher ist, den Ofen auch im Leerlauf weiter zu befeuern.

Aus der WO 2004/009513 A1 ist ein Verfahren sowie ein Gefäß zur Durchführung eines Verfahrens zur Herstellung von Dentalkeramik unter Verwendung von Mikrowellen bekannt. Bei Dentalkeramik handelt es sich um Feinkeramik. Das Verfahren ist jedoch nicht für die großtechnische Herstellung von grobkeramischen Formkörpern geeignet, und beschränkt sich ferner auf Materialvolumen von bis zu 10 cm$^3$.

Die WO 01/04558 A1 beschreibt einen Mikrowellenofen zum Trocknen von Keramik bei Trockentemperaturen von etwa 150 °C. Die beschriebenen Temperaturen ermöglichen keine Sintervorgänge, so dass kein gebrannter grobkeramischer Formkörper erhalten werden kann.

Grobkeramische Formkörper weisen im Vergleich zu Feinkeramiken, wie beispielsweise Dentalkeramik, Porzellan oder Hochleistungskeramik, große Massen oder Abmaße auf. Dies führt dazu, dass bei der Herstellung von grobkeramischen Formkörpern eine definierte Temperatursteuerung essentiell ist, da ansonsten ein längerer Zeitraum benötigen wird, bis im gesamten Volumen des Formkörpergrünlings Temperaturen von mehreren 100 °C vorliegen, die erforderlich sind, um Reaktionen und Sintervorgänge im Formkörpergrünling zu ermöglichen.

Liegt keine definierte Temperatursteuerung vor, ist es zwar möglich, den Brennvorgang zu verlangsamen und/oder zu verlängern, jedoch werden hierdurch die Prozesszeiten für die Herstellung eines gebrannten grobkeramischen Formkörper so gesteigert, dass ein entsprechendes großindustrielles Herstellungsverfahren nicht mehr wirtschaftlich relevant ist.

Wie vorstehend beschrieben, ist es also essentiell, dass der grobkeramische Formkörper kontrolliert getrocknet und/oder gebrannt wird. Dies führt typischerweise bei grobkeramischen Formkörpern zu langen Prozesszeiten, in denen dem Formkörper kontinuierlich Energie zugeführt werden muss. Zeitgleich kann aufgrund der schlechten Wärmeleitfähigkeit und dem großen zu erwärmenden Volumen ein großer Anteil des Energieeintrags nicht effektiv genutzt werden. Insgesamt resultiert dies während der Herstellung eines gebrannten grobkeramischen Formkörpers in einem hohen Energieverbrauch, was sich letztendlich in dessen Herstellungskosten und $CO_2$-Fussabdruck niederschlägt.

Eine Aufgabe der Erfindung ist es, ein im Vergleich zu konventionellen Verfahren besonders wirtschaftliches und energiesparendes Verfahren zur Herstellung eines gebrannten grobkeramischen Formkörpers bereitzustellen, das darüber hinaus die benötigte Menge an fossilen Brennstoffen, die zur Erzeugung der für die Trocknung und/oder das Brennen erforderlichen thermische Energie zumindest teilweise so reduziert, dass ein hergestellter Formkörper wirtschaftliche Relevanz und einen geringeren $CO_2$-Fußabdruck aufweist.

Die der Erfindung zugrundeliegende Aufgabe wird durch die Bereitstellung eines Verfahrens gemäß Anspruch 1 zur Herstellung wenigstens eines gebrannten grobkeramischen Formkörpers gelöst.

Es ist möglich, dass eine Vorrichtung bereitgestellt wird, in der das Verfahren zur Herstellung des wenigstens einen gebrannten grobkeramischen Formkörpers gemäß Anspruch 1 durchgeführt wird.

Die mittlere Temperaturänderungsrate wird bestimmt, in dem die Oberflächentemperatur des wenigstens einen Formkörpergrünlings gemessen wird. Die mittlere Temperaturänderungsrate $\frac{\Delta T}{\Delta t}$ entspricht der mittleren Änderung der Oberflächentemperatur $\Delta T$ in einem spezifischen Zeitintervall $\Delta t$. Es ist möglich die mittlere Temperaturänderungsrate durch Gleichung (1) zu ermitteln:

$$\frac{\Delta T}{\Delta t} = \frac{T_2 - T_1}{t_2 - t_1} \qquad\qquad (1)$$

Die zumindest eine Aufwärmphase von Schritt c) beginnt mit dem Beginn von Schritt c) und/oder nach einem Temperaturplateau. Mit dem Ende von Schritt c) und/oder dem Beginn eines Temperaturplateaus in Schritt c) endet die zumindest eine Aufwärmphase. Zur Bestimmung der mittleren Temperaturänderungsrate $\frac{\Delta T_{c)}}{\Delta t_{c)}}$ der zumindest einen Aufwärmphase in Schritt c) kann $T_1$ der Oberflächentemperatur des wenigstens einen Formkörpergrünlings zu Beginn der zumindest einen Aufwärmphase von Schritt c) entsprechen, wobei $t_1$ somit als 0 min gewertet werden kann. Weiter kann $T_2$ hierbei der Oberflächentemperatur des wenigstens einen Formkörpergrünlings zu dem Zeitpunkt $t_2$ der zumindest einen Aufwärmphase von Schritt c) entsprechen, wobei $t_2$ und somit $\Delta t_{c)}$ der Dauer der zumindest einen Aufwärmphase von Schritt c) entspricht.

Weist Schritt c) nur eine Aufwärmphase auf, so kann $T_1$ als die Oberflächentemperatur des wenigstens einen Formkörpergrünlings zu Beginn von Schritt c) gewertet werden. $T_2$ entspricht dann der Oberflächentemperatur des wenigstens einen Formkörpers am Ende von Schritt c), wobei das Zeitintervall $\Delta t_{c)}$ der Dauer von Schritt c) entspricht.

Beispielsweise ist es möglich, dass der wenigstens eine Formkörpergrünling zu Beginn von Schritt c) ($t_1$ = 0 min) eine Oberflächentemperatur von $T_1$ = 50 °C aufweist und auf $T_2$ = 1100 °C innerhalb der zumindest einen Aufwärmphase von $t_2$ = 90 min erwärmt wird. Es ergibt sich somit nach Gleichung (1) eine Temperaturänderungsrate $\frac{\Delta T_{c)}}{\Delta t_{c)}}$ für diese Aufwärmphase von Schritt c) von 11,6 K/min.

Die Oberflächentemperatur kann beispielsweise mittels Infrarotthermometer gemessen werden.

Unter dem Begriff "gebrannter keramischer Formkörper" wird ein Formkörper verstanden, der nach dem Aushärten oder Abkühlen im Anschluss an einen Brennvorgang, zumindest in Teilbereichen stoffschlüssige Verbindungen, vorzugsweise in Form von Sinterbrücken, zwischen in dem Formkörper enthaltenen keramischen Partikeln, aufweist.

Unter dem Begriff "Randbereich" wird oberflächennah angeordnetes Material im Formkörpergrünling und/oder Formkörper verstanden. Bei Betrachtung senkrecht auf eine Oberfläche, insbesondere eines Dachziegel, ist als Randbereich das Material zu verstehen, dass bevorzugt bis maximal 3 mm, weiter bevorzugt bis maximal 2 mm, noch weiter bevorzugt bis maximal 1,8 mm, von jeder Oberfläche des Formkörpergrünlings und/oder Formkörpers entfernt angeordnet ist. Es ist aber auch möglich, dass, insbesondere bei Fassadenplatten, Klinkersteinen oder Ziegelsteinen, unter Randbereich das Material verstanden wird, das bei Betrachtung senkrecht auf eine Oberfläche bis maximal 5 mm, bevorzugt bis maximal 3 mm, weiter bevorzugt bis maximal 2 mm, von jeder Oberfläche entfernt angeordnet ist.

Unter dem Begriff "Kernmaterial" wird das Material verstanden, welches nicht oberflächennah angeordnet, sondern im Inneren angeordnet ist. Bei Betrachtung senkrecht auf eine Oberfläche, insbesondere eines Dachziegel, ist als Kernmaterial das Material zu verstehen, dass bevorzugt zumindest 3 mm, bevorzugt zumindest 2 mm, weiter bevorzugt zumindest 1,8 mm, von jeder Oberfläche des Formkörpergrünling und/oder Formkörper entfernt angeordnet ist. Es ist aber auch möglich, dass, insbesondere bei Fassadenplatten, Klinkersteinen oder Ziegelsteinen, unter Kernmaterial das Material verstanden wird, das bei Betrachtung senkrecht auf eine Oberfläche zumindest 5 mm, vorzugsweise zumindest 3 mm, vorzugsweise zumindest 2 mm, von jeder Oberfläche entfernt angeordnet ist. Das Kernmaterial wird vollständig vom Randbereich umschlossen.

Unter dem Begriff "keramische Partikel" werden Partikel verstanden, die im Wesentlichen ein nicht-metallisches anorganisches Material umfassen oder daraus bestehen, welches durch Einwirken von Wärmestrahlung, vorzugsweise ab einer Temperatur von 600 °C, weiter bevorzugt ab einer Temperatur von 750 °C, zumindest teilweise schmelzbar ist. Weiter bevorzugt umfassen die keramischen Partikel silikatische Keramik, vorzugsweise in Form von zerkleinerten Bestandteilen wenigstens eines gebrannten keramischen Formkörpers, beispielsweise in Form von Ziegelmehl, Ziegelsplitt oder Mischungen davon. Aus TonmineralPartikeln können keramische Partikel erhalten werden.

Unter dem Begriff "Grobkeramik" wird Keramik verstanden, deren ungebrannte Formmasse Partikel umfasst, die einen volumenäquivalenten Kugeldurchmesser, $x_{50,\,3}$, von mehr als 100 $\mu$m, bevorzugt mehr als 200 $\mu$m aufweist. Grobkeramik wird auch als Baukeramik bezeichnet. Grobkeramische gebrannte grobkeramische Formkörper sind gebrannte keramische Formkörper aus Grobkeramik.

Der mittlere volumenäquivalente Kugeldurchmesser, $x_{50,\,3}$, kann beispielsweise durch Laserbeugung, beispielsweise gemäß dem in der ISO 13320:2020-01 ("Particle size analysis - Laser diffraction methods", Deutscher Titel: "Partikelgrößenanalyse - Partikelmessung durch Laserlichtbeugung", Ausgabedatum: 2020-01) beschriebenen Vorgehensweise bestimmt werden.

Unter dem Begriff "Formkörpergrünling" wird erfindungsgemäß ein Formkörper verstanden, der formstabil ist und ungebrannten Lehm und/oder ungebrannten Ton und optional Zuschläge umfasst, bevorzugt darauf basiert. Ein Formkörpergrünling weist Tonmineralpartikel auf. Weiter kann ein Formkörpergrünling auch keramische Partikel beispielsweise in Form von silikatischer Keramik, vorzugsweise aus zerkleinerten Bestandteilen eines gebrannten grobkeramischen Formkörpers, aufweisen.

Unter dem Begriff "Tonmineral" wird erfindungsgemäß ein Schichtsilikat, wie beispielsweise Kaolinit, Illit, Smektite, Vermiculit, Montmorillonit, Chlorit, Hectorit, Saponit oder eine Mischung davon, verstanden.

Unter dem Begriff "grobkeramischer Formkörper" wird kein Formkörper verstanden, der aus Feinkeramik, Nicht-Oxid-Keramik, Hochleistungskeramik und/oder Porzellan besteht.

Unter dem Begriff "Feinkeramik" wird Keramik mit einer homogenen Struktur verstanden die keine Partikel mit einem mittleren volumenäquivalenten Kugeldurchmesser, $x_{50,\,3}$, in der ungebrannten Formmasse aufweist, die größer sind als die Partikeln einer Grobkeramik, bevorzugt die größer sind als 100 $\mu$m.

Unter dem Begriff "Porzellan" wird ein feinkeramisches, porenfreies und wasserdichtes Erzeugnis mit weißem Erscheinungsbild verstanden, dass im Herstellungsverfahren eine unterkühlte Schmelze ausbildet. Die Formmasse von Porzellan umfasst Kaolin, Feldspat und Quarzsand, wobei der Kaolingehalt an aus einem Bereich von 20 Gew.-% bis 80 Gew.-%, insbesondere von 25 Gew.-% bis 70 Gew.-%, ausgewählt ist, bezogen auf das Trockengewicht der Formmasse.

Unter dem Begriff "Nicht-Oxid-Keramik" wird Keramik verstanden, die Mischbindungen mit überwiegend kovalenten Bindungen und nur einen geringen Anteil an ionischen Bindungen aufweist, wie beispielsweise Nitride,

EP 4 509 483 B1

Carbide oder Boride.

Unter dem Begriff "Hochleistungskeramik" wird technische Keramik verstanden, die nicht zu einem dekorativen Zweck eingesetzt wird, sondern deren Eigenschaften hinsichtlich einer technischen Anwendung optimiert sind, wie beispielsweise Hitzebeständigkeit, elektrische Isolation, Härte und/oder medizinische Anwendungen. Der technischen Anwendung entsprechend kann eine Hochleistungskeramik beispielsweise als Elektrokeramik, Dentalkeramik oder Hochtemperaturkeramik bezeichnet werden. Elektrokeramik kann Bestandteile von Isolatoren, Kondensatoren, Zündkerzen und/oder elektronischen Schaltungen umfassen. Hochtemperaturkeramik kann Heizelemente umfassen und Dentalkeramik kann Zahnersatz, Keramikkronen, Keramikinlays und/oder Keramikverblendungen umfassen. Hochleistungskeramik ist typerweise feinkeramisch.

Unter dem Begriff "Trocknen" wird erfindungsgemäß verstanden, dass die Menge an flüssigen Bestandteilen und/oder Feuchtigkeit, vorzugsweise Wasser, die in und/oder auf einem Körper enthalten sind, reduziert wird, ohne dass es dabei zu Sintervorgängen kommt. Vorzugsweise erfolgt ein Trocknen beispielsweise eines Formkörpergrünlings, in dem flüssige Bestandteile und/oder Feuchtigkeit, vorzugsweise Wasser, enthalten sind, unter Einwirkung von zusätzlich zugeführter Energie.

Unter dem Begriff "Brennen" wird erfindungsgemäß verstanden, dass die in einem Formkörpergrünling vorliegenden Tonmineralpartikel und/oder keramischen Partikel durch Beaufschlagung mit und/oder Einbringung von Energie, vorzugsweise mittels direkter oder indirekter Wärmestrahlung, derart erhitzt werden, dass zumindest die Randbereiche der Tonmineralpartikel und/oder keramischen Partikel zumindest teilweise schmelzen und/oder stoffschlüssige Verbindungen, vorzugsweise in Form von Sinterbrücken, ausgebildet werden. Vorzugsweise erhält der Formkörper durch Brennen seine endgültige Festigkeit, wobei die Festigkeit bei Raumtemperatur, beispielsweise bei 25 °C, bestimmt wird.

Bei dem erfindungsgemäßen Verfahren wird elektromagnetische Strahlung zum Brennen und optional zum Trocknen von 300 MHz bis 300 GHz verwendet, wobei sich vorzugsweise der wenigstens eine bereitgestellte Formkörpergrünling zusätzlich vom Kernmaterial aus erhitzt.

Bei konventionellen Verfahren ist es außerdem notwendig, das den wenigstens einen Formkörpergrünling und/oder wenigstens einen Formkörper umgebende Gasvolumen und somit auch die vollständige Brennkammer zu erwärmen. Bis das vollständige Volumen der Brennkammer auf Betriebstemperatur gebracht wird, vergeht jedoch viel Zeit, so dass es wirtschaftlicher ist, die Brennkammer auch im Leerlauf weiter zu befeuern. Da im erfindungsgemäßen Verfahren der wenigstens eine Formkörpergrünling und/oder wenigstens eine Formkörper und nicht zuerst die Brennkammer erwärmt wird, ist es auch möglich die Vorrichtung, in der das erfindungsgemäße Verfahren durchgeführt wird, bei Leerlauf herunterzufahren, wodurch der Energieverbrauch stark reduziert werden kann.

In einem konventionellen Verfahren, welches beispielsweise in einem Tunnelofen durchgeführt wird, wird ein Formkörpergrünling typischerweise innerhalb ca. 7 h von beispielsweise 50 °C auf beispielsweise 1100 °C erwärmt. Das entspricht einer mittleren Temperaturänderungsrate von ca. 2,5 K/min. Anschließend wird der Formkörpergrünling über ca. 2 h bei 1100 °C gehalten, um zu gewährleisten, dass der Formkörpergrünling auch im Kernmaterial gebrannt worden ist. Ein anschließendes Abkühlen auf beispielsweise 100 °C benötigt einen Zeitraum von ca. 7 h, was einer mittleren Temperaturänderungsrate von ca. -2,38 K/min entspricht. Somit benötigt ein in einem Tunnelofen durchgeführtes konventionellen Verfahren, welches Brennen und Abkühlen umfasst, typischerweise eine Prozesszeit von ca. 16 h. Wie vorstehend ausgeführt, ist diese lange Prozesszeit unter anderen auf die schlechte Wärmeleitfähigkeit des Materials des Formkörpergrünlings zurückzuführen.

Dementgegen bietet die Erwärmung des Formkörpergrünlings und/oder des Formkörpers von innen den wesentlichen Vorteil, dass - im Vergleich zu einem konventionellen Verfahren - innerhalb eines kürzeren Zeitraums Formkörpergrünlinge getrocknet und/oder gebrannt, vorzugsweise zumindest teilweise gesintert, werden können.

Aufgrund des kurzen Zeitraums, der für die Durchführung des erfindungsgemäßen Verfahrens benötigt wird, ergibt sich ein äußerst energiesparendes und effizientes Verfahren, mit dem gebrannte grobkeramische Formkörper mit einem großen Durchsatz hergestellt werden können.

Des Weiteren wird bei der Durchführung des erfindungsgemäßen Verfahrens - im Vergleich zu konventionellen Verfahren - wesentlich weniger Stell- und/oder Lagerfläche und/oder weniger Zeit bei gleicher Stückzahlproduktion benötigt. Beispielsweise kann der optionale Schritt des Trocknens in der gleichen Vorrichtung wie der Schritt des Brennens durchgeführt werden, so dass für diese Verfahrensschritte keine zusätzlichen Vorrichtungen nötig sind. Damit kann außerdem das Brennen der Formkörpergrünlinge direkt im Anschluss an das Trocknen der Formkörpergrünlinge durchgeführt werden, so dass die Formkörpergrünlinge zwischen den Verfahrensschritten nicht gelagert werden müssen.

Bei dem erfindungsgemäßen Verfahren ist ferner vorteilhaft, dass im Formkörpergrünling während des Trocknens und/oder Brennens entstehender Dampf, bevorzugt Wasserdampf, durch die noch nicht getrocknete und damit durchlässigere Oberfläche nach außen entweichen kann. Bei konventionellen Verfahren trocknet der Formkörpergrünling zuerst an der Oberfläche, welche dann weniger durchlässig ist. Da der Formkörpergrünling gleichmäßiger über das Volumen verteilt trocknet, kann auch eine gleichmäßiger auftretende Volumenschrumpfung stattfinden. Dies kann auch bei einer schnelleren Trocknung zu einer geringeren Verformung des Körpers und zu einer geringeren Bildung von Rissen führen. Hierdurch wird zusätzlich der Ausschuss an gebrannten grobkeramischen Formkörper, die nicht den Qualitätsansprüchen genügen, reduziert. Des Weiteren weist ein durch das erfindungsgemäße Verfahren erhaltener gebrannter grobkeramischer Formkörper trotz des effizienteren Herstellungsverfahrens keine schlechteren mechanischen Eigenschaften auf, als ein Formkörper, der mittels eines konventionellen Verfahrens hergestellt wird.

Das Verfahren eignet sich besonders gut, zur Herstellung von, insbesondere dickwandigen, gebrannten grobkeramischen Produkten wie Dachziegeln, Fassadenplatten, Ziegelsteinen und Klinkersteinen, ist jedoch nicht darauf beschränkt.

Weitere vorteilhafte Ausgestaltungen der Erfindung sind in den Unteransprüchen angegeben.

In Schritt a) des Verfahrens wird zunächst wenigstens ein Formkörpergrünling bereitgestellt.

Es ist möglich, dass in Schritt a) der wenigstens eine bereitgestellte Formkörpergrünling, und/oder der wenigstens eine in Schritt c) erhaltene gebrannte grobkeramische Formkörper, eine Dicke oder Stärke aufweist, die in einem Bereich von 6 mm bis 365 mm, bevorzugt von 7 mm bis 50 mm, liegt. Die Dicke oder Stärke ist der Abstand von einer einem Betrachter zugewandten Oberfläche zu einer gegenüberliegenden Oberfläche des wenigstens einen Formkörpergrünlings und/oder wenigstens einen Formkörpers, jeweils bei senkrechter Betrachtung von oben auf die von dem Formkörpergrünling aufgespannte Frontalebene.

Es ist weiter möglich, dass eine laterale Ausdehnung in Schritt a) des wenigstens einen bereitgestellten Formkörpergrünlings und/oder in Schritt c) dem wenigstens einen erhaltenen gebrannten grobkeramischen Formkörper in zumindest eine Richtung entlang der jeweils vom Formkörpergrünling und/oder gebrannten grobkeramischen Formkörper aufgespannten Frontalebene wenigstens 11 cm beträgt, insbesondere einen Wert ausgewählt aus einem Bereich von 11 cm bis 250 cm beträgt. Mit anderen Worten kann der wenigstens eine Formkörpergrünling und/oder wenigstens eine gebrannte grobkeramische Formkörper, bei senkrechter Betrachtung von oben auf die vom Formkörpergrünling aufgespannte Frontalebene, jeweils Abmessungen von wenigstens 11 cm x 15 cm, vorzugsweise Abmessungen ausgewählt aus einem Bereich von 11 cm x 15 cm bis 250 cm x 250 cm, bevorzugt von 11 cm x 15 cm bis 40 cm x 60 cm, aufweisen.

Vorzugsweise weist in Schritt a) der wenigstens eine bereitgestellte Formkörpergrünling, und/oder in Schritt c) der wenigstens eine erhaltene gebrannte grobkeramische Formkörper, jeweils ein Feststoffvolumen ausgewählt aus einem Bereich von 165 cm$^3$ bis 250.000 cm$^3$, bevorzugt von 245 cm$^3$ bis 15.000 cm$^3$, weiter bevorzugt von 245 cm$^3$ bis 4.800 cm$^3$, auf. Vorzugsweise weist in Schritt a) der wenigstens eine bereitgestellte Formkörpergrünling, und/oder in Schritt c) der wenigstens eine erhaltene gebrannte grobkeramische Formkörper, jeweils ein Trockengewicht ausgewählt aus einem Bereich von 330 g bis 500.000 g, bevorzugt von 490 g bis 30.000 g, weiter bevorzugt von 490 g bis 9.600 g, auf.

Das Trockengewicht ist das Gewicht eines Körpers oder einer Masse, bevorzugt des wenigstens einen Formkörpergrünling, welches erhalten wird, nachdem dieser bis zur Gewichtskonstanz bei 120 °C getrocknet wird, beispielsweise in einem Trockenschrank oder auf einer Trockenwaage.

Der Feuchtegehalt eines Körpers oder einer Masse, bevorzugt des wenigstens einen Formkörpergrünlings, wird erhalten in dem die Differenz zwischen Gesamtgewicht und Trockengewicht des Körpers oder der Masse, bevorzugt des wenigstens einen Formkörpergrünlings, ins Verhältnis zu dem Trockengewicht des Körpers oder der Masse, bevorzugt des wenigstens einen Formkörpergrünlings, gesetzt wird. Mit anderen Worten ist der Feuchtgehalt der Gewichtsverlust des Gesamtgewichts eines Körpers oder einer Masse, bevorzugt des wenigstens einen Formkörpergrünlings, bei der Bestimmung des Trockengewichts im Verhältnis zum jeweiligen Trockengewicht. Der Feuchtegehalt wird in Gewichtsprozent angegeben.

Der wenigstens eine in Schritt a) bereitgestellte Formkörpergrünling weist vorzugsweise einen maximalen Feuchtegehalt von maximal 30 Gew.-%, bevorzugt von maximal 20 Gew.- %, weiter bevorzugt von maximal 10 Gew.-%, jeweils bezogen auf das Trockengewicht des wenigsten einen in Schritt a) bereitgestellten Formkörpergrünlings, auf.

Der wenigstens eine bereitgestellte Formkörpergrünling weist vorzugsweise einen Feuchtegehalt ausgewählt aus einem Bereich von mehr als 0 Gew.-% bis 30 Gew.-%, vorzugsweise von 0,1 Gew.-% bis 25 Gew.-%, weiter bevorzugt von 0,5 Gew.-% bis 10 Gew.-%, jeweils bezogen auf das Trockengewicht des wenigstens einen in Schritt a) bereitgestellten Formkörpergrünlings, auf.

Der wenigstens eine in Schritt a) bereitgestellte Formkörpergrünling kann ungebrannten Ton und/oder ungebrannten Lehm sowie optional Zuschlägen umfassen, bevorzugt daraus bestehen.

Der wenigstens eine bereitgestellte Formkörpergrünling kann ungebrannten Lehm ausgewählt aus einem Bereich von 50 Gew.-% bis 95 Gew.-%, bevorzugt von 60 Gew.-% bis 90 Gew.-%, noch weiter bevorzugt von 70 Gew.-% bis 85 Gew.-%, aufweisen, jeweils bezogen auf das Trockengewicht des wenigstens einen Formkörpergrünlings.

Der wenigstens eine bereitgestellte Formkörpergrünling kann ungebrannten Ton ausgewählt aus einem Bereich von 5 Gew.-% bis 50 Gew.-%, bevorzugt von 10 Gew.-% bis 40 Gew.-%, noch weiter bevorzugt von 15 Gew.-% bis 30 Gew.-% aufweisen, jeweils bezogen auf das Trockengewicht des wenigstens einen Formkörpergrünlings.

Der wenigstens eine bereitgestellte Formkörpergrünling kann Zuschläge ausgewählt aus einem Bereich von 0 Gew.-% bis 15 Gew.-%, bevorzugt von 0 Gew.-% bis 10 Gew.-%, noch weiter bevorzugt von 0 Gew.-% bis 8 Gew.-%, aufweisen. Die Bestandteile des Formkörpergrünlings sind so zu wählen, dass sie in Summe 100 Gew.-%, jeweils bezogen auf das Trockengewicht des wenigstens einen Formkörpergrünlings, ergeben.

Vorzugsweise weist der wenigstens eine in Schritt a) bereitgestellte Formkörpergrünling, insbesondere für die Herstellung wenigstens eines gebrannten grobkeramischen Formkörpers zur Verwendung als Dachziegel, folgende Bestandteile auf, die so ausgewählt werden, dass sie in Summe 100 Gew.-%, jeweils bezogen auf das Trockengewicht des wenigstens einen Formkörpergrünlings, ergeben:

| | |
|---|---|
| Ungebrannter Lehm: | 50 Gew.-% bis 95 Gew.-%, |
| Ungebrannter Ton: | 5 Gew.-% bis 50 Gew.-%, |
| Zuschläge: | 0 Gew.-% bis 15 Gew.-%, |

| | |
|---|---|
| Weiter bevorzugt: | |
| Ungebrannter Lehm: | 60 Gew.-% bis 90 Gew.-%, |
| Ungebrannter Ton: | 10 Gew.-% bis 40 Gew.-%, |
| Zuschläge: | 0 Gew.-% bis 10 Gew.-%, |

| | |
|---|---|
| Noch weiter bevorzugt: | |
| Ungebrannter Lehm: | 70 Gew.-% bis 85 Gew.-%, |
| Ungebrannter Ton: | 15 Gew.-% bis 30 Gew.-%, |
| Zuschläge: | 0 Gew.-% bis 8 Gew.-%. |

Unter dem Begriff "Zuschläge" werden beispielsweise Füllstoffe, Magerungsmittel, Flussmittel, Härter, Farbmittel, Porenbildner, Salzbinder oder Kombinationen davon verstanden. Insbesondere werden unter Zuschlägen Materialien verstanden, die lediglich einen geringen Anteil beispielsweise bis maximal 15 Gew.-%, bevorzugt bis maximal 10 Gew.-%, weiter bevorzugt bis maximal 8 Gew.-%, des Trockengewichts eines Formkörpergrünlings ausmachen, um die jeweilige Funktion zu erfüllen. Vorzugsweise verleiht ein Füllstoff dem Formkörpergrünling Volumen und/oder Stabilität. Ein Magerungsmittel verringert vorzugsweise einen Schwund beim Brennen und reduziert den Anteil von teureren Bestandteilen.

Beispielsweise kann Sand als Zuschlag, insbesondere als Magerungsmittel, zugeben werden. Vorzugsweise ist vorgenannter Sand Quarzsand und/oder Buntsandstein. Ein Härter kann dem Werkstoff eine höhere mechanische Festigkeit verleihen. Ein Flussmittel ist ein keramisches Material, welches die Temperatur, die erforderlich ist, damit eine Schmelzphase vorliegt, erniedrigt. Ein Salzbinder verringert das Ausblühen von Salzen, also eine Versalzung der Formkörperoberfläche. Beispielsweise kann als Salzbinder Bariumcarbonat zugegeben werden. Ein Porenbildner ist ein organisches Material, welches beim Brennvorgang vollständig oxidiert, so dass dieses im gebrannten Formkörper nicht mehr vorhanden ist und somit Hohlräume ausgebildet worden sind.

Der wenigstens eine in Schritt a) bereitgestellte Formkörpergrünling und/oder der in Schritt c) erhaltene gebrannte grobkeramische Formkörper weist bevorzugt einen Aluminiumoxid ($Al_2O_3$)-Gehalt von maximal 25 Gew.-%, bevorzugt von maximal 19 Gew.-%, weiter bevorzugt von maximal 15 Gew.-%, auf, jeweils bezogen auf das Trockengewicht des wenigstens einen Formkörpergrünlings und/oder des gebrannten grobkeramischen Formkörpers. Es ist möglich, dass in Schritt a) der wenigstens eine bereitgestellte Formkörpergrünling und/oder der in Schritt c) erhaltene gebrannte grobkeramische Formkörper einen $Al_2O_3$-Gehalt, ausgewählt aus einem Bereich von 0 Gew.-% bis 25 Gew.-%, weiter bevorzugt von 0,1 Gew.-% bis 19 Gew.-%, noch weiter bevorzugt von 1 Gew.-% bis 15 Gew.-%, jeweils bezogen auf das Trockengewicht des wenigstens einen Formkörpergrünlings und/oder des gebrannten grobkeramischen Formkörpers, aufweist.

Beispielsweise kann das Aluminiumoxid als $\alpha$-$Al_2O_3$, als $\beta$-$Al_2O_3$ und/oder als $\gamma$-$Al_2O_3$ oder als Mullit-Anteil vorliegen. Weiter kann Aluminiumoxid in Kombination mit weiteren Oxiden beispielsweise in Kombination mit $SiO_2$ als Aluminosilikat, vorliegen.

Der Aluminiumoxid-Gehalt wird beispielsweise durch Röntgendiffraktometrie bestimmt.

Der vorstehend angegebene begrenzte Gehalt an Aluminiumoxid bietet den Vorteil, dass die elektromagnetische Strahlung, mit der der Formkörpergrünling beaufschlagt wird, besonders effektiv mit dem Formkörpergrünling wechselwirkt. Damit kann der Formkörpergrünling in einem kurzen Zeitraum auf eine definierte Oberflächentemperatur erwärmt werden. Hierdurch ist es möglich, dass Verfahren mit einer besonders hohen Effizienz bzw. geringen Energieaufwand, insbesondere im Vergleich zu konventionellen Verfahren, durchzuführen.

Der wenigstens eine in Schritt a) bereitgestellter Formkörpergrünling wird vorzugsweise durch ein Formgebungsverfahren, zum Beispiel durch eine plastische Formgebung erhalten. Hierzu durchläuft eine lehmhaltige und/oder tonhaltige Masse, die aufbereitet wurde, nachfolgend als Formmasse bezeichnet, zunächst beispielsweise einen Doppelwellenmischer. Eine Aufbereitung kann eine Vorzerkleinerung umfassen. Am Doppelwellenmischer kann der Formmasse in beschränktem Umfang noch Wasser, Dampf und/oder auch Porosierungsmittel oder andere Zuschläge zugesetzt werden. Anschließend wird die Formmasse im Schneckenteil des Doppelwellenmischers verknetet und kann in einer Vakuumkammer eines Extruders evakuiert werden. Eine Schneckenpresse verdichtet die Formmasse und befördert diese in den Presskopf des Extruders. Durch ein Mundstück des Extruders wird der Strang gebildet. Dieser wird auf eine benötigte Länge gekürzt und/oder in eine gewünschte Form gebracht. Im Fall von Pressdachziegeln werden diese mittels Ober- und Unterform auf Revolver- oder Drehtischpressen in Form gebracht. Beispielsweise werden bei den Formgebungsverfahren zur Herstellung von Pressdachziegeln Gipsformen verwendet.

Auch kann der wenigstens eine in Schritt a) bereitgestellte Formkörpergrünling mittels Trocken- oder Halbtrocken-Pressverfahren erhalten werden. Hierbei weisen die dort verwendeten Formmassen in der Regel im Vergleich zur plastischen Formgebung einen geringen Feuchtegehalt, bevorzugt bis zu 20 Gew.-% bezogen auf das Trockengewicht des Formkörpergrünlings, auf. Trocken- und Halbtrocken-Pressverfahren werden mit relativ hohen Drücken, beispielsweise bis zu 1000 bar und mehr, vorwiegend als sogenanntes isostatisches Pressen ausgeführt. Hierbei kommt eine Pressform zum Einsatz, die eine bewegliche Formwand in Gestalt einer Membran aufweist, während die übrige Wand der Formhöhlung in der Regel aus Metall oder Kunststoff besteht und entsprechend glatt ist.

Die angestrebte Konsistenz der verwendeten Formmasse wird abhängig vom verwendeten Formgebungsverfahren eingestellt. Schwankungen in der Konsistenz der Formmasse sind insofern unkritisch, da der Druckkontakt mit der formgebenden Oberfläche so lange aufrechterhalten werden kann, bis eine hinreichende Verfestigung eintritt. Die Verfestigung tritt durch eine Abfuhr von Feuchtigkeit und/oder durch ein Wirksamwerden wenigstens eines Bestandteils der Formmasse als Bindemittel aufgrund des angelegten Druckes und/oder aufgrund einer chemischen Reaktion ein.

Bei einer bevorzugten Ausführung der Erfindung weist der wenigstens eine bereitgestellte Formkörpergrünling wenigstens einen Mikrowellen-Suszeptor, vorzugsweise in Form von Mikrowellen-Suszeptor-Partikeln, auf.

Unter dem Begriff "Mikrowellen-Suszeptor" wird erfindungsgemäß ein, bevorzugt bei Standardbedingungen (Temperatur: 25 °C, Druck: 1013 mbar) festes, anorganisches Material verstanden, das elektromagnetische Strahlung mit einer Frequenz von 300 MHz bis 300 GHz absorbiert und diese zumindest teilweise in Wärmestrahlung umwandelt.

Vorzugsweise weist der wenigstens eine in Schritt a) bereitgestellte Formkörpergrünling wenigstens einen Mikrowellen-Suszeptor auf, der vorzugsweise aus der Gruppe, die aus Carbiden, Nitriden, Boriden, Graphit, Siliciden, und Mischungen davon besteht, ausgewählt ist. Bevorzugt umfasst der Mikrowellen-Suszeptor SiC, $Si_3N_4$, oder Mischungen davon, weiter bevorzugt SiC, noch weiter bevorzugt alpha-SiC, oder besteht daraus.

Besonders vorteilhaft bei der Verwendung von SiC als Mikrowellen-Suszeptor, beispielsweise in Form von diskreten Suszeptor-Partikeln, vorzugsweise von alpha-SiC, sind insbesondere dessen geringer Kostenfaktor, hohe Temperaturbeständigkeit und gute Temperaturwechselbeständigkeit. SiC weist des Weiteren äußerst vorteilhaft einen hohen Wirkungsgrad bei der Umwandlung von Mikrowellen in Wärmestrahlung auf.

Es ist möglich, dass der wenigstens eine Formkörpergrünling bereitgestellt wird, wobei in dem wenigstens einen Formkörpergrünling der Mikrowellen-Suszeptor homogen oder heterogen verteilt angeordnet sind. Beispielsweise kann der Mikrowellen-Suszeptor aus einem oxidischen anorganischen Material bestehen, dass dotiert ist, bevorzugt mit den vorstehenden Materialien dotiert ist, wobei die Dotierung natürlichen Ursprung sein kann und/oder synthetisch hinzugefügt wurde.

Der Vorteil von Mikrowellen-Suszeptoren zeigt sich insbesondere während dem optionalen Schritt b) und während Schritt c) des Verfahrens. So können geeignete Mikrowellen-Suszeptoren beispielsweise in einem Formkörpergrünling, welcher ohne Mikrowellen-Suszeptor bei niedrigen Temperaturen, beispielsweise Raumtemperatur, die elektromagnetische Strahlung nur geringfügig absorbiert, nach der Einwirkung der elektromagnetischen Strahlung Bereiche mit erhöhter Temperatur im Kernmaterial bereitstellen. Die Mikrowellen-Suszeptor absorbieren die elektromagnetische Strahlung und wandeln die elektromagnetische Strahlung zumindest teilweise in Wärme um. Der Zeitraum für das Aufheizen des Formkörpergrünlings auf Temperaturen, bei denen das verwendete Material des Formkörpergrünlings von sich aus elektromagnetische Strahlung mit einer Frequenz von 300 MHz bis 300 GHz in ausreichender Menge absorbiert, kann dadurch verkürzt werden und der $CO_2$-Fußabdruck weiter reduziert werden.

Ein optionales Trocknen in Schritt b) und/oder das Brennen in Schritt c) eines Formkörpergrünlings kann in Gegenwart einer ausreichenden Menge an Mikrowellen-Suszeptoren die beispielsweise in dem Formkörpergrünling vorhanden sind und/oder mit zumindest einer Oberfläche des Formkörpergrünlings in Kontakt stehen, in einem kürzeren Zeitraum durchgeführt werden.

Bei einer bevorzugten Ausführungsform ist wenigstens ein Mikrowellen-Suszeptor homogen in dem wenigstens einen Formkörpergrünling verteilt. Dadurch wird der wenigstens eine Formkörpergrünling, beispielsweise nach Einwirkung von elektromagnetischer Strahlung mit einer Frequenz von 300 MHz bis 300 GHz, vorzugsweise homogen über das Formkörpervolumen erwärmt. Beispielsweise kann eine homogene Verteilung des wenigstens einen Mikrowellen-Suszeptors in Formkörpergrünlingen durch Mischen unter Erhalt einer homogenen Formmasse von geeigneten Ausgangsmaterialien und den zuvor genannten Bestandteilen des wenigstens einen Formkörpergrünlings, nach im Stand der Technik bekannten Verfahren vor der Bereitstellung des wenigstens einen Formkörpergrünlings erreicht werden.

Bei einer alternativen Ausführungsform ist der Mikrowellen-Suszeptor heterogen in dem wenigstens einen Formkörpergrünling verteilt. Beispielsweise kann der Mikrowellen-Suszeptor bereichsweise im wenigstens einen Formkörpergrünling angereichert vorliegen. Insbesondere bei Formkörpergrünlingen, die eine größere Stärke aufweisen, kann es von Vorteil sein, wenn wenigstens ein geeigneter Mikrowellen-Suszeptor in den Randbereich des wenigstens einen Formkörpergrünlings eingebracht wird und/oder im Kernmaterial des wenigstens einen Formkörpergrünlings angeordnet wird. Damit kann auch bei mangelnder Eindringtiefe der elektromagnetischen Strahlung mit einer Frequenz von 300 MHz bis 300 GHz trotzdem von dem positiven Effekt des Mikrowellen-Suszeptors profitiert werden.

Eine heterogene Verteilung des wenigstens einen Mikrowellen-Suszeptors kann im wenigstens einen Formkörpergrünling nach im Stand der Technik bekannten Verfahren vor, während und/oder nach der Bereitstellung des wenigstens einen Formkörpergrünlings erreicht werden.

Bei einer bevorzugten Ausführungsform weist der wenigstens eine Mikrowellen-Suszeptor in dem wenigstens einen in Schritt a) bereitgestellten Formkörpergrünling einen Anteil von maximal 10 Gew.-%, vorzugsweise aus einem Bereich von mehr als 0 Gew.-% bis 7 Gew.-%, weiter bevorzugt von 0,1 Gew.-% bis 5 Gew.-%, noch weiter bevorzugt von 0,25 Gew.-% bis 4 Gew.-%, ferner noch weiter bevorzugt von 0,5 Gew.-% bis 3 Gew.-%, jeweils bezogen auf das Trockengewicht des wenigstens einen in Schritt a) bereitgestellten Formkörpergrünlings, auf. Es ist möglich, dass der Mikrowellen-Suszeptor einen mittleren volumenäquivalenten Kugeldurchmesser, $x_{50, 3}$, ausgewählt aus einem Bereich von 1,2 $\mu$m bis 109 $\mu$m, bevorzugt von 12 $\mu$m bis 82 $\mu$m, weiter bevorzugt von 22 $\mu$m bis 69 $\mu$m, aufweist.

Der mittlere volumenäquivalente Kugeldurchmesser, $x_{50, 3}$, kann wie vorstehend beschrieben bestimmt werden.

Durch die vorgenannten bevorzugten Gewichtsanteile und mittleren volumenäquivalenten Kugeldurchmesser des Mikrowellen-Suszeptors wird vorzugsweise gewährleistet, dass im Formkörpergrünling eine geeignete Menge an Mikrowellen-Suszeptor enthalten ist, die wie oben beschrieben homogen oder heterogen im Formkörpergrünling angeordnet sein können. Hierdurch kann eine sehr gute Wärmeverteilung während des erfindungsgemäßen Verfahrens über den gesamten Formkörpergrünling gewährleistest werden. Weiter werden die bevorzugten mechanischen Eigenschaften des, optional getrockneten, Formkörpergrünlings und/oder gebrannten grobkeramischen Formkörpers durch den enthaltenen Mikrowellen-Suszeptor nicht negativ beeinflusst.

Bei einer bevorzugten Ausführungsform wird der wenigstens eine Formkörpergrünling auf einem Trägerelement bereitgestellt, das auch als Brennhilfsmittel bezeichnet wird. Das Trägerelement bietet den Vorteil, dass bei einer Handhabung, beispielsweise Transport, des noch nicht mit endgültiger Festigkeit versehenen Formkörpergrünlings eine Beschädigung und/oder Verformung des Formkörpergrünlings zumindest verringert, vorzugsweise vermieden, werden kann. Es ist möglich, dass das Trägerelement derart geformt ist, dass es Bestandteil eines Regals, beispielsweise ein Regalboden, ist. Es ist möglich, dass das Trägerelement, insbesondere das Brennhilfsmittel, eine Kassette, bevorzugt eine U-Kassette und/oder eine H-Kassette, ist.

Bei einer bevorzugten Ausführungsform weist das Trägerelement zumindest teilweise wenigstens ein Abstandselement und/oder wenigstens eine Aussparung auf. Das wenigstens eine Abstandselement und/oder die wenigstens eine Aussparung kann zumindest teilweise wenigstens als Rille, Riffel, Rippe, Nut, Öffnung, vorzugsweise als Längsschlitz und/oder als Loch, beispielsweise Quadratloch, Rundloch, Langloch und/oder Sechskantloch, und/oder als ähnliche Struktur ausgebildet sein. Dies hat den Vorteil, dass der Formkörpergrünling nicht vollflächig mit dem Trägerelement in Kontakt steht, so dass Dampf, bevorzugt Wasserdampf, besser aus dem Formkörpergrünling abgeführt werden kann. Des Weiteren wird hierdurch das Gewicht des Trägerelements reduziert. Vorzugsweise ist die Ausgestaltung des Trägerelements, bevorzugt des Abstandselements oder der Aussparung, an den Formkörpergrünling angepasst, um dessen Form zu stützen.

Des Weiteren wird bei einer nicht-vollflächigen Anordnung des Formkörpergrünlings auf dem Trägerelement ein verbessertes Eindringen elektromagnetischer Strahlung in den Formkörpergrünling ermöglicht. Aufgrund der in dem Trägerelement vorhandenen wenigstens einen Aussparung, beispielsweise in Form von wenigsten einem Längsschlitz und/oder Loch, beispielsweise Quadratloch, Rundloch, Langloch und/oder Sechskantloch, wird die elektromagnetische Strahlung nicht wesentlich abgeschirmt oder abgeschwächt.

Weiter ist es auch möglich, dass das Trägerelement, auf dem der wenigstens eine Formkörpergrünling bereitgestellt wird, aus anorganischem Material besteht, welches vorzugsweise zumindest teilweise Mikrowellen-Suszeptoren umfasst oder daraus besteht. Insbesondere wird der wenigstens eine Formkörpergrünling auf einem Trägerelement angeordnet, das SiC umfasst oder daraus besteht. Dadurch wird auch bei dem Trägerelement bei Einstrahlung von elektromagnetischer Strahlung mit einer Frequenz von 300 MHz bis 300 GHz diese in Wärmestrahlung umgewandelt. Vorteilhafterweise wird hierdurch das Aufheizen des wenigstens einen Formkörpergrünlings unterstützt und das erfindungsgemäße Verfahren effizienter gestaltet. Hierdurch wird der $CO_2$-Fussabdruck des Verfahrens bzw. des damit wenigstens einen bereitgestellten Formkörpers weiter reduziert.

Alternativ ist es möglich, dass das Trägerelement auf dem der wenigstens eine Formkörpergrünling bereitgestellt wird, für elektromagnetischer Strahlung mit einer Frequenz von 300 MHz bis 300 GHz zumindest teilweise durchlässig ist. Das Trägerelement ist bevorzugt gegenüber der verwendeten elektromagnetischen Strahlung mit einer Frequenz von 300 MHz bis 300 GHz zu mindestens 20 %, weiter bevorzugt zu mindestens 50 %, noch weiter bevorzugt zu mindestens 70 % durchlässig, fern noch weiter bevorzugt zu mindestens 90 %, durchlässig.

Hierdurch wird die elektromagnetische Strahlung nicht vom Trägerelement absorbiert, sondern vollständig vom Formkörpergrünling.

Vorzugsweise wird auf einem Trägerelement nur ein Formkörpergrünling angeordnet. Vorzugsweise werden mehrere Formkörpergrünlinge nicht übereinander angeordnet für das Verfahren bereitgestellt und/oder nicht übereinander angeordnet gebrannt. Hierdurch wird eine einheitliche Beaufschlagung der Formkörpergrünlinge mit der elektromagnetischen Strahlung gewährleistet. Zusätzlich wird die Bauhöhe einer Vorrichtung zur Durchführung des Verfahrens reduziert.

Es ist möglich mehrere Trägerelemente auf denen jeweils ein Formkörpergrünling angeordnet ist, nebeneinander für das Verfahren bereitzustellen, wobei insbesondere Schritt c) für die nebeneinander bereitgestellten Formkörpergrünlinge zeitgleich durchgeführt wird.

Bei einer bevorzugten Ausführungsform wird in Schritt a) wenigstens ein Formkörpergrünling bereitgestellt, der ungebrannten Lehm ausgewählt aus einem Bereich von 50 Gew.-% bis 95 Gew.-%, bevorzugt von 60 Gew.-% bis 90 Gew.-%, noch weiter bevorzugt von 70 Gew.-% bis 85 Gew.-%, ungebrannten Ton ausgewählt aus einem Bereich von 5 Gew.-% bis 50 Gew.-%, bevorzugt von 10 Gew.-% bis 40 Gew.-%, noch weiter bevorzugt von 15 Gew.-% bis 30 Gew.-% und Zuschläge ausgewählt aus einem Bereich von mehr als 0 Gew.-% bis 15 Gew.-%, bevorzugt von mehr als 0 Gew.-% bis 10 Gew.-%, noch weiter bevorzugt von mehr als 0 Gew.-% bis 8 Gew.-%, aufweist, wobei die Bestandteile so gewählt sind, dass sie in Summe 100 Gew.-%, jeweils bezogen auf das Trockengewicht des wenigstens einen Formkörpergrünlings, ergeben. Bei dieser bevorzugten Ausführungsform weist der wenigstens eine Formkörpergrünling einen $Al_2O_3$-Gehalt ausgewählt aus einem Bereich von mehr als 0 Gew.-% bis 29 Gew.-%, weiter bevorzugt von 0,1 Gew.-% bis 19 Gew.-%, noch weiter bevorzugt von 1 Gew.-% bis 15 Gew.-%, jeweils bezogen auf das Trockengewicht des wenigstens einen Formkörpergrünlings, auf. Weiter weist der wenigstens eine Formkörpergrünling bei dieser bevorzugten Ausführungsform einen Feuchtegehalt ausgewählt aus einem Bereich von mehr als 0 Gew.-% bis 30 Gew.-%, vorzugsweise von 0,1 Gew.-% bis 25 Gew.-%, weiter bevorzugt von 0,5 Gew.-% bis 10 Gew.-%, jeweils bezogen auf das Trockengewicht des wenigstens einen in Schritt a) bereitgestellten Formkörpergrünlings, auf.

In dem optionalen Schritt b) des erfindungsgemäßen Verfahrens wird der wenigstens eine in Schritt a) bereitgestellte Formkörpergrünling zumindest teilweise getrocknet. Schritt b) umfasst insbesondere zumindest eine Aufwärmphase, in der der wenigstens eine Formkörpergrünling mit Energie beaufschlagt wird, wodurch sich der wenigstens eine Formkörpergrünling erwärmt und die Oberflächentemperatur des wenigstens einen Formkörpergrünlings erhöht wird. Die zumindest eine Aufwärmphase von Schritt b) startet zu Beginn von Schritt b) und/oder nach einem Temperaturplateau. Mit dem Ende von Schritt b) und/oder dem Beginn eines Temperaturplateaus in Schritt b) endet die zumindest eine Aufwärmphase.

Unter dem Begriff "teilweise getrocknet" wird ein Feuchtegehalt des wenigstens einen Formkörpergrünlings von maximal 1 Gew.-%, bevorzugt von maximal 0,5 Gew.-%, bezogen auf das Trockengewicht des wenigstens einen zumindest teilweise getrockneten Formkörpergrünlings, verstanden. Weiter wird unter dem Begriff "getrocknet" bevorzugt ein Feuchtegehalt des wenigstens einen Formkörpergrünlings von maximal 0,1 Gew.-%, bezogen auf das Trockengewicht des wenigstens einen Formkörpergrünlings, verstanden. Der Feuchtegehalt wird wie weiter oben beschrieben ermittelt.

Bei einer weiteren bevorzugten Ausführungsform der Erfindung weist der wenigstens eine Formkörpergrünling zu Beginn von Schritts b) einen Feuchtegehalt ausgewählt aus einem Bereich von 0,5 Gew.-% bis 30 Gew.-%, bevorzugt von 1 Gew.-% bis 25 Gew.-%, weiter bevorzugt von 3 Gew.-% bis 10 Gew.-%, noch weiter bevorzugt von 5 Gew.-% bis 8 Gew.- %, auf. Der Feuchtegehalt des wenigstens einen Formkörpergrünlings ist jeweils bezogen auf das Trockengewicht des wenigstens einen Formkörpergrünlings zu Beginn von Schritt b). Der Feuchtegehalt wird wie weiter oben beschrieben ermittelt.

Es ist möglich, dass Schritt b) derart durchgeführt wird, dass der wenigstens eine Formkörpergrünling am Ende von Schritt b) zumindest teilweise eine Oberflächentemperatur ausgewählt aus einem Bereich von 75 °C bis 230 °C, bevorzugt von 105 °C bis 190 °C, weiter bevorzugt von 115 °C bis 175 °C, aufweist.

Es ist möglich, dass der wenigstens eine Formkörpergrünling in Schritt b) in der zumindest einen Aufwärmphase mit einer mittleren Temperaturänderungsrate $\frac{\Delta T_{b)}}{\Delta t_{b)}}$ ausgewählt aus einem Bereich von 0,5 K/min bis 5 K/min, bevorzugt von 0,7 K/min bis 3 K/min, noch weiter bevorzugt von 1 K/min bis 2 K/min, erwärmt wird.

Es ist möglich, die mittlere Temperaturänderungsrate der zumindest einen Aufwärmphase in Schritt b) wie vorstehend dargelegt durch Gleichung (1) zu ermitteln.

Zur Bestimmung der mittleren Temperaturänderungsrate $\frac{\Delta T_{b)}}{\Delta t_{b)}}$ in Schritt b) kann $T_1$ der Oberflächentemperatur

des wenigstens einen Formkörpergrünlings zu Beginn der zumindest einen Aufwärmphase von Schritt b) entsprechen, wobei $t_1$ somit als 0 min gewertet werden kann. Weiter kann $T_2$ hierbei der Oberflächentemperatur des wenigstens einen Formkörpergrünlings zu dem Zeitpunkt $t_2$ der zumindest einen Aufwärmphase von Schritt b) entsprechen, wobei $t_2$ und somit $\Delta t_{b)}$ der Dauer der zumindest einen Aufwärmphase von Schritt b) entspricht.

Weist Schritt b) nur eine Aufwärmphase auf, so kann $T_1$ als die Oberflächentemperatur des wenigstens einen Formkörpergrünlings zu Beginn von Schritt b) gewertet werden. $T_2$ entspricht dann der Oberflächentemperatur des wenigstens einen Formkörpergrünlings am Ende von Schritt b), wobei das Zeitintervall $\Delta t_{b)}$ der Dauer von Schritt b) entspricht.

Das Erwärmen des wenigstens einen Formkörpergrünlings in der zumindest einen Aufwärmphase in Schritt b) kann im Wesentlichen als Funktion ausgewählt aus der Gruppe, die aus Gerade, Wurzelfunktion, Exponentialfunktion, Potenzfunktion, Logarithmusfunktion oder Kombinationen davon besteht, beschrieben werden. Vorzugsweise erfolgt das Erwärmen des wenigstens einen Formkörpergrünlings im Wesentlichen linear.

Weiter ist es möglich, dass Schritt b) zwei oder mehrere Aufwärmphasen umfasst, wobei die Aufwärmphasen jeweils unabhängig voneinander mittlere Temperaturänderungsraten aufweisen. So ist es möglich, dass die mittlere Temperaturänderungsrate der ersten Aufwärmphase des Schritts b) größer oder kleiner ist als die mittlere Temperaturänderungsrate der zweiten Aufwärmphase des Schritts b).

Es ist möglich, dass die zumindest eine Aufwärmphase in Schritt b) über einen Zeitraum von maximal 360 min, bevorzugt von maximal 120 min, durchgeführt wird. Vorzugsweise wird die zumindest eine Aufwärmphase in Schritt b) über einen Zeitraum ausgewählt aus einem Bereich von 30 min bis 360 min, bevorzugt von 30 min bis 240 min, weiter bevorzugt von 30 min bis 120 min, durchgeführt.

Es ist möglich, dass Schritt b) zumindest ein Temperaturplateau aufweist. In dem zumindest einen Temperaturplateau von Schritt b) wird die Oberflächentemperatur des wenigstens einen Formkörpergrünlings über einen spezifischen Zeitraum im Mittel im Wesentlichen konstant, bevorzugt bei einer Schwankungsbreite von $\pm 20$ °C, gehalten und/oder die gegenwertige mittlere Temperaturänderungsrate auf weniger als $\pm 4$ K/min, bevorzugt im Wesentlichen auf 0 K/min, gesetzt.

Das zumindest eine Temperaturplateau in Schritt b) wird bevorzugt über einen Zeitraum von wenigstens 10 min gehalten, insbesondere in dem der wenigstens eine Formkörpergrünling mit elektromagnetischer Strahlung beaufschlagt wird. Weiter bevorzugt wird das zumindest eine Temperaturplateau in Schritt b) über einen Zeitraum ausgewählt aus einem Bereich von 10 min bis 360 min, weiter bevorzugt von 30 min bis 240 min, noch weiter bevorzugt von 30 min bis 120 min, gehalten, insbesondere in dem der wenigstens eine Formkörpergrünling mit elektromagnetischer Strahlung beaufschlagt wird.

Es ist möglich, dass das zumindest eine Temperaturplateau in Schritt b) bei einer Oberflächentemperatur des wenigstens einen zumindest teilweise getrockneten Formkörpergrünlings und/oder gebrannten grobkeramischen Formkörpers ausgewählt aus einem Bereich von 80 °C bis 220 °C, bevorzugt von 100 °C bis 180 °C, weiter bevorzugt von 120 °C bis 160 °C, gehalten wird.

Es ist möglich, dass das zumindest eine Temperaturplateau zwischen einer ersten Aufwärmphase und einer zweiten Aufwärmphase angeordnet ist. Hierbei ist es möglich, dass die mittlere Temperaturänderungsrate der ersten Aufwärmphase des Schritts b) größer, kleiner oder gleich ist als die mittlere Temperaturänderungsrate der zweiten Aufwärmphase des Schritts b).

Alternativ oder zusätzlich ist es möglich, dass ein Temperaturplateau zum Ende von Schritt b) durchgeführt wird. Mit anderen Worten weist Schritt b) nach dem Temperaturplateau keine weitere Aufwärmphase auf.

Vorzugsweise wird der wenigstens eine Formkörpergrünling in Schritt b), insbesondere in der zumindest einen Aufwärmphase und/oder dem zumindest einen Temperaturplateau, mit einer mittleren Leistungsdichte von wenigstens 200 W/kg, bevorzugt von wenigstens 300 W/kg, weiter bevorzugt von wenigstens 400 W/kg, vorzugsweise mittels elektromagnetischer Strahlung, beaufschlagt, jeweils bezogen auf das Trockengewicht des wenigstens einen zu Beginn von Schritt b) vorliegenden Formkörpergrünlings. Es ist möglich, dass der wenigstens eine Formkörpergrünling in Schritt b), insbesondere in der zumindest einen Aufwärmphase und/oder dem zumindest einen Temperaturplateau, mit einer mittleren Leistungsdichte ausgewählt aus einem Bereich von 200 W/kg bis 2000 W/kg, bevorzugt von 300 W/kg bis 1000 W/kg, weiter bevorzugt von 350 W/kg bis 700 W/kg, vorzugsweise mittels elektromagnetischer Strahlung, beaufschlagt wird, jeweils bezogen auf das Trockengewicht des wenigstens einen zu Beginn von Schritt b) vorliegenden Formkörpergrünlings.

Bei einer bevorzugten Ausführungsform der Erfindung wird während Schritt b) die, vorzugsweise mittels elektromagnetische Strahlung, auf das Trockengewicht des wenigstens einen Formkörpergrünlings zu Beginn von Schritt b) bezogene mittlere Leistungsdichte variiert, bevorzugt erhöht, weiter bevorzugt stufenweise und/oder kontinuierlich erhöht. Insbesondere ist es möglich, dass die auf das Trockengewicht des wenigstens einen Formkörpergrünlings zu Beginn von Schritt b) bezogene mittlere Leistungsdichte in unterschiedlichen Erwärmungsphasen variiert, bevorzugt erhöht, weiter bevorzugt stufenweise und/oder kontinuierlich erhöht, wird.

Es ist möglich, dass in Schritt b), insbesondere in der zumindest einen Aufwärmphase und/oder dem zumindest einen Temperaturplateau, des Verfahrens elektromagnetische Strahlung mit einer Frequenz ausgewählt aus einem Bereich von 300 MHz (Wellenlänge: ca. 1000 mm) bis 300 GHz (Wellenlänge: ca. 1 mm), bevorzugt von 600 MHz (Wellenlänge: ca. 500 mm) bis 6000 MHz (Wellenlänge: ca. 50 mm), weiter bevorzugt von 700 MHz (Wellenlänge: ca. 428 mm) bis 4300 MHz (Wellenlänge: ca. 70 mm), noch weiter bevorzugt von 730 MHz (Wellenlänge: ca. 411 mm) bis 4000 MHz (Wellenlänge: ca. 75 mm), ferner noch weiter bevorzugt von 850 MHz (Wellenlänge: ca. 353 mm) bis 3000 MHz (Wellenlänge: ca. 100 mm), verwendet wird. Besonders bevorzugt sind die Frequenzen von 915 MHz $\pm$ 50 MHz (Wellenlänge: ca. 328 mm), bevorzugt 915 MHz $\pm$ 10 MHz, und 2450 MHz $\pm$ 50 MHz (Wellenlänge: ca. 122 mm), bevorzugt 2450 MHz $\pm$ 10 MHz.

Bei einer Ausführungsform des erfindungsgemäßen Verfahrens werden in Schritt b) bevorzugt zwei oder mehrere Frequenzen, weiter bevorzugt zwei Frequenzen, ausgewählt aus einem Bereich von 300 MHz bis 300 GHz, bevorzugt von 600 MHz bis 6000 MHz, weiter bevorzugt von 700 MHz bis 4300 MHz, noch weiter bevorzugt von 730 MHz bis 4000 MHz, ferner noch weiter bevorzugt von 850 MHz bis 3000 MHz, verwendet. Vorzugsweise werden die Frequenzen 915 MHz $\pm$ 50 MHz und 2450 MHz $\pm$ 50 MHz, weiter bevorzugt 915 MHz $\pm$ 10 MHz und 2450 MHz $\pm$ 10 MHz, verwendet.

Die Verwendung von zwei oder mehreren Frequenzen, vorzugsweise von zwei Frequenzen, ist vorteilhaft, da unterschiedliche Frequenzen unterschiedliche Eindringtiefen aufweisen können und sich örtlich unterschiedliche Maxima und Minima in der Feldverteilung ausbilden. Bei zumindest teilweise gleichbleibenden Materialeigenschaften des wenigstens einen in Schritt b) zumindest teilweise zu trocknenden Formkörpergrünlings, ist die Eindringtiefe umso größer, je niedriger die eingestellte Frequenz ist. Somit erwärmt sich in der Regel das Kernmaterial zumindest teilweise stärker, wenn niedrigere Frequenzen verwendet werden. Dies ermöglicht vorteilhafterweise eine gezieltere Steuerung der Erwärmung des wenigstens einen Formkörpergrünlings durch das zumindest teilweise Anpassen der ausgewählten Frequenzen in Abhängigkeit des jeweils vorliegenden Formkörpers. Dadurch kann das Erwärmen in Schritt b) des wenigstens einen Formkörpergrünlings besser kontrolliert werden. Bei Verwendung unterschiedlicher Frequenzen kann auch leichter eine Homogenisierung der elektrischen Feldstärkenverteilung in der Vorrichtung zur Durchführung des Verfahrens, insbesondere im Brennraum, erreicht werden.

Es ist möglich, dass in Schritt b), insbesondere in der zumindest einen Aufwärmphase, zusätzlich Gas, vorzugsweise mit einer Temperatur ausgewählt aus einem Bereich 80 °C bis 150 °C, weiter bevorzugt von 90 °C bis 120 °C, eingeblasen wird. Bevorzugt wird als Gas Luft und/oder ein Luftgemisch verwendet. Es ist möglich, dass für das in Schritt b) eingeblasenes Gas, erwärmtes Gas verwendet wird, welche in Schritt c) und/oder während des Kühlvorgangs in Schritt d) erhalten wird. Hierbei ist es möglich, dass das aus Schritt d) erhaltene Gas durch Vermischen mit weiterem Gas an eine eingestellte Temperatur angepasst wird.

Bei einer bevorzugten Ausführungsform wird zumindest eine von vorzugsweise ein oder mehreren Austrittsdüsen für Gas zumindest teilweise direkt auf den wenigstens einen Formkörpergrünling gerichtet. Alternativ oder zusätzlich wird zumindest eine der vorzugsweise ein oder mehreren Austrittdüsen nicht direkt auf den wenigstens einen Formkörpergrünling gerichtet.

Hierdurch wird ein Abführen von Dampf, vorzugsweise Wasserdampf, von dem wenigstens einen Formkörpergrünling erreicht. Durch ein gezieltes Kontaktieren des wenigstens einen Formkörpergrünlings mit dem Gas wird bevorzugt die Ausbildung einer Sättigung des Gases mit Dampf in der den wenigstens einen Formkörpergrünling umgebenden Gasphase kontrolliert, wodurch das Trocknen des wenigstens einen Formkörpergrünlings gesteuert werden kann.

Bei einer bevorzugten Ausführungsform der Erfindung wird der wenigstens eine Formkörpergrünling in Schritt b) angefeuchtet, vorzugsweise mit Flüssigkeit, vorzugsweise Wasser, kontaktiert.

Beispielsweise kann ein Anfeuchten mit Flüssigkeit, vorzugsweise Wasser, durch mit wenigstens einer Sprühdüse versehenes Befeuchtungssystem erfolgen, wobei Flüssigkeit, vorzugsweise Wasser, auf den wenigstens einen Formkörpergrünling aufgebracht wird und/oder in das Umgebungsvolumen versprüht wird. Durch Kontaktieren mit Flüssigkeit, vorzugsweise Wasser, kann die Feuchtigkeit des wenigstens einen Formkörpergrünlings und/oder der Gasphase des Umgebungsvolumens, beispielsweise durch Sättigung mit Dampf, vorzugsweise Wasserdampf, eingestellt werden. Damit kann einer zu raschen Trocknung, insbesondere der Randbereiche, des wenigstens einen Formkörpergrünlings entgegengewirkt werden. Dadurch kann vorzugsweise eine Ausbildung von inneren Spannungen und/oder durch innere Spannung verursachte Risse vermindert werden.

Weiter bevorzugt wird zumindest eine Austrittsdüse des Befeuchtungssystems zumindest teilweise direkt auf den wenigstens einen Formkörpergrünling gerichtet. Alternativ oder zusätzlich kann zumindest eine Austrittsdüse des Befeuchtungssystems nicht direkt auf den wenigstens einen Formkörpergrünling gerichtet werden.

Es ist möglich, dass Schritt b) über einen Zeitraum ausgewählt aus einem Bereich von 15 min bis 360 min, bevorzugt von 30 min bis 240 min, noch weiter bevorzugt von 45 min bis 120 min, durchgeführt wird.

Dadurch wird vorzugsweise ein über das Formkörpervolumen homogener Feuchtegehalt in dem wenigstens einen nach Schritt b) erhaltenen zumindest teilweise getrockneten Formkörpergrünling gewährleistet und Risse aufgrund von Trockenstress vermieden.

Gemäß einer bevorzugten Variation der Erfindung wird der wenigstens eine Formkörpergrünling mit keiner zusätzlichen Wärmestrahlung während Schritt b) beaufschlagt, die über das Verbrennen von Kohlenwasserstoffen oder Widerstandsheizungen erzeugt wurde.

Bei einer bevorzugten Ausführungsform weist der wenigstens eine Formkörpergrünling zu Beginn von Schritt b) einen Feuchtegehalt, ausgewählt aus einem Bereich von 0,5 Gew.-% bis 30 Gew.-%, bevorzugt von 1 Gew.-% bis 25 Gew.-%, weiter bevorzugt von 3 Gew.-% bis 10 Gew.-%, noch weiter bevorzugt von 5 Gew.-% bis 8 Gew.-%, auf, jeweils bezogen auf das Trockengewicht des wenigstens einen Formkörpergrünlings zu Beginn von Schritt b), wobei Schritt b) über einen Zeitraum ausgewählt aus einem Bereich von 15 min bis 360 min, bevorzugt von 30 min bis 240 min, noch weiter bevorzugt von 45 min bis 120 min, durchgeführt wird, und der wenigstens eine Formkörpergrünling, insbesondere in der zumindest einen Aufwärmphase und/oder dem Temperaturplateau, mit einer mittleren Leistungsdichte ausgewählt aus einem Bereich von 200 W/kg bis 2000 W/kg, bevorzugt von 300 W/kg bis 1000 W/kg, weiter bevorzugt von 350 W/kg bis 700 W/kg, vorzugsweise mittels elektromagnetischer Strahlung, beaufschlagt wird, jeweils bezogen auf das Trockengewicht des wenigstens einen zu Beginn von Schritt b) vorliegenden Formkörpergrünlings. Bei dieser bevorzugten Ausführungsform wird der wenigstens eine Formkörpergrünling in Schritt b) in der zumindest einen Aufwärmphase mit einer mittleren Temperaturänderungsrate $\frac{\Delta T_{b)}}{\Delta t_{b)}}$ von 0,5 K/min bis 5 K/min, bevorzugt von 0,7 K/min bis 3 K/min, noch weiter bevorzugt von 1 K/min bis 2 K/min, erwärmt, wobei der wenigstens eine Formkörpergrünling am Ende von Schritt b) zumindest teilweise eine Oberflächentemperatur ausgewählt aus einem Bereich von 75 °C bis 230 °C, bevorzugt von 105 °C bis 190 °C, weiter bevorzugt von 115 °C bis 175 °C, aufweist.

Vorstehende Kombination an Verfahrensparametern bietet einen guten Kompromiss zwischen Energieersparnis und Produktionsdurchsatz.

In Schritt c) wird der wenigstens eine in Schritt a) bereitgestellte, und/oder der wenigstens eine optional in Schritt b) zumindest teilweise getrocknete, Formkörpergrünling unter Beaufschlagen mit elektromagnetischer Strahlung mit einer Frequenz von 300 MHz bis 300 GHz gebrannt, wobei ein gebrannter grobkeramischer Formkörper erhalten wird. Schritt c) umfasst zumindest eine Aufwärmphase. Hierdurch erwärmt sich der wenigstens eine Formkörpergrünling, wobei die Erhöhung seiner Oberflächentemperatur gemessen werden kann.

Bei dem erfindungsgemäßen Verfahren weist der wenigstens eine Formkörpergrünling zu Beginn des Schritts c) einen Feuchtegehalt von maximal 1 Gew.-%, besonders bevorzugt von maximal 0,5 Gew.-%, auf. Es ist möglich, dass zu Beginn des Schritts c) der wenigstens eine Formkörpergrünling einen Feuchtegehalt ausgewählt aus einem Bereich von mehr als 0 Gew.-% bis 1 Gew.-%, weiter bevorzugt von 0,1 Gew.-% bis 0,5 Gew.-%, aufweist. Die vorstehenden Feuchtegehalte beziehen sich jeweils auf das Trockengewicht des wenigstens einen Formkörpergrünlings zu Beginn von Schritt c). Der Feuchtegehalt wird wie weiter oben beschrieben ermittelt.

Der im vorangehenden Absatz angegebene Feuchtegehalt hat den Vorteil, dass die Gefahr von Abplatzungen während des Brennvorgangs aufgrund des schnellen Erwärmens und dem damit einhergehenden schlagartigen Verdampfen der enthaltenen Feuchtigkeit, bevorzugt Wasser, verringert wird.

Es ist möglich, dass Schritt c) derart durchgeführt wird, dass der wenigstens eine gebrannte grobkeramische Formkörper am Ende von Schritt c) zumindest teilweise eine Oberflächentemperatur ausgewählt aus einem Bereich von 800 °C bis 1600 °C, bevorzugt von 900 °C bis 1400 °C, weiter bevorzugt von 1000 °C bis 1200 °C, aufweist.

Es ist möglich, dass der wenigstens eine Formkörpergrünling in Schritt c) in der zumindest einen Aufwärmphase mit einer mittleren Temperaturänderungsrate $\frac{\Delta T_{c)}}{\Delta t_{c)}}$ von wenigstens 11,6 K/min, bevorzugt von wenigstens 17,5 K/min, erwärmt wird.

Vorzugsweise wird der wenigstens eine Formkörpergrünling in Schritt c) in der zumindest einen Aufwärmphase mit einer mittleren Temperaturänderungsrate $\frac{\Delta T_{c)}}{\Delta t_{c)}}$ aus einem Bereich von 5 K/min bis 50 K/min, bevorzugt von 11,6 K/min bis 35 K/min, noch weiter bevorzugt von 17,5 K/min bis 25 K/min, erwärmt.

Das Erwärmen des wenigstens einen Formkörpergrünlings in der zumindest einen Aufwärmphase in Schritt c) kann im Wesentlichen als Funktion ausgewählt aus der Gruppe, die aus Gerade, Wurzelfunktion, Exponentialfunktion, Potenzfunktion, Logarithmusfunktion oder Kombinationen davon besteht , beschrieben werden. Vorzugsweise erfolgt das Erwärmen des wenigstens einen Formkörpergrünlings im Wesentlichen linear.

Weiter ist es möglich, dass Schritt c) zwei oder mehrere Aufwärmphasen umfasst, wobei die Aufwärmphasen jeweils unabhängig voneinander mittlere Temperaturänderungsraten aufweisen. So ist es möglich, dass die mittlere Temperaturänderungsrate der ersten Aufwärmphase des Schritts c) größer oder kleiner ist als die mittlere Temperaturänderungsrate der zweiten Aufwärmphase des Schritts c).

Es ist möglich, dass die zumindest eine Aufwärmphase in Schritt c) über einen Zeitraum von maximal 300 min, bevorzugt von maximal 160 min, weiter bevorzugt von maximal 90 min, bevorzugt von maximal 60 min, durchgeführt wird.

Vorzugsweise wird die zumindest eine Aufwärmphase in Schritt c) über einen Zeitraum, ausgewählt aus einem Bereich von 10 min bis 300 min, bevorzugt von 15 min bis 160 min, weiter bevorzugt von 20 min bis 90 min, noch weiter bevorzugt von 25 min bis 60 min, durchgeführt. Insbesondere wird unter dem vorstehenden Zeitraum die Summe der Zeiträume aller Aufwärmphasen in Schritt c) verstanden.

Es ist möglich, dass Schritt c) zumindest ein Temperaturplateau aufweist. In dem zumindest einen Temperaturplateau von Schritt c) wird die Oberflächentemperatur des wenigstens einen Formkörpergrünlings und/oder gebrannten grobkeramischen Formkörpers über einen spezifischen Zeitraum im Mittel im Wesentlichen konstant, bevorzugt bei einer Schwankungsbreite von $\pm 50$ °C, gehalten und/oder die gegenwertige mittlere Temperaturänderungsrate auf weniger als $\pm 4$ K/min, bevorzugt im Wesentlichen auf 0 K/min, gesetzt.

Das zumindest eine Temperaturplateau in Schritt c) wird bevorzugt über einen Zeitraum von maximal 100 min, weiter bevorzugt von maximal 75 min, noch weiter bevorzugt von maximal 60 min, bevorzugt von maximal 45 min, gehalten, insbesondere indem der wenigstens eine Formkörpergrünling und/oder gebrannte grobkeramische Formkörper mit elektromagnetischer Strahlung beaufschlagt wird. Weiter bevorzugt wird das zumindest eine Temperaturplateau in Schritt c) über einen Zeitraum ausgewählt aus einem Bereich von 10 min bis 100 min, weiter bevorzugt von 15 min bis 75 min, noch weiter bevorzugt von 20 min bis 60 min, ferner noch weiter bevorzugt von 25 min bis 45 min, gehalten, insbesondere in dem der wenigstens eine Formkörpergrünling und/oder gebrannte grobkeramischen Formkörper mit elektromagnetischer Strahlung beaufschlagt wird.

Es ist möglich, dass in Schritt c) der wenigstens eine Formkörpergrünling und/oder gebrannte grobkeramische Formkörper während des zumindest einem Temperaturplateaus auf einer Oberflächentemperatur ausgewählt aus einem Bereich von 800 °C bis 1600 °C, bevorzugt von 900 °C bis 1400 °C, weiter bevorzugt von 1000 °C bis 1200 °C, gehalten wird.

Es ist möglich, dass das zumindest eine Temperaturplateau zwischen einer ersten Aufwärmphase des Schritts c) und einer zweiten Aufwärmphase des Schritts c) angeordnet ist. Hierbei ist es möglich, dass die mittlere Temperaturänderungsrate der ersten Aufwärmphase des Schritts c) größer, kleiner oder gleich ist als die mittlere Temperaturänderungsrate der zweiten Aufwärmphase des Schritts c).

Alternativ oder zusätzlich ist es möglich, dass ein Temperaturplateau zum Ende von Schritt c) durchgeführt wird. Mit anderen Worten weist Schritt c) nach dem Temperaturplateau dann keine weitere Aufwärmphase auf.

Dies bietet den Vorteil, dass der Brennvorgang besser gesteuert werden kann. So ist es möglich, dass die erste mittlere Temperaturänderungsrate größer ist als die zweite mittlere Temperaturänderungsrate. Dies ermöglicht ein schnelles Aufwärmen des wenigstens einen Formkörpergrünlings und ein langsameres Annähern an die angestrebte Oberflächentemperatur.

Vorzugsweise wird der wenigstens eine Formkörpergrünling in Schritt c), insbesondere in der zumindest einen Aufwärmphase und/oder dem zumindest einen Temperaturplateau, mit elektromagnetischer Strahlung mit einer mittleren Leistungsdichte von wenigstens 600 W/kg, bevorzugt von wenigstens 700 W/kg, weiter bevorzugt von wenigstens 800 W/kg, beaufschlagt, jeweils bezogen auf das Trockengewicht des wenigstens einen zu Beginn von Schritt c) vorliegenden Formkörpergrünlings. Es ist möglich, dass der wenigstens eine Formkörpergrünling in Schritt c), insbesondere in der zumindest einen Aufwärmphase und/oder dem zumindest einen Temperaturplateau, mit elektromagnetischer Strahlung mit einer mittleren Leistungsdichte ausgewählt aus einem Bereich von 500 W/kg bis 4000 W/kg, bevorzugt von 700 W/kg bis 3500 W/kg, weiter bevorzugt von 750 W/kg bis 3000 W/kg, beaufschlagt wird, jeweils bezogen auf das Trockengewicht des wenigstens einen zu Beginn von Schritt c) vorliegenden Formkörpergrünlings.

Bei einer bevorzugten Ausführungsform der Erfindung wird während Schritt c) die mittels elektromagnetischer Strahlung auf das Trockengewicht des wenigstens einen Formkörpergrünlings zu Beginn von Schritt c) bezogene Leistungsdichte, bevorzugt mittlere Leistungsdichte, variiert, bevorzugt erhöht, weiter bevorzugt stufenweise und/oder kontinuierlich erhöht. Insbesondere ist es möglich, dass die auf das Trockengewicht des wenigstens einen Formkörpergrünlings zu Beginn von Schritt c) bezogene Leistungsdichte, bevorzugt mittlere Leistungsdichte, in unterschiedlichen Aufwärmphasen unterschiedlich ist und/oder variiert, bevorzugt erhöht, weiter bevorzugt stufenweise und/oder kontinuierlich erhöht, wird. Weiter ist es möglich, dass die auf das Trockengewicht des wenigstens einen Formkörpergrünlings zu Beginn von Schritt c) bezogene Leistungsdichte, bevorzugt mittlere Leistungsdichte, in einer Aufwärmphase und/oder einem Temperaturplateau niedriger ist, bevorzugt reduziert wird, im Vergleich zu einer vorangegangenen Aufwärmphase und/oder Temperaturplateau. Dies ist insbesondere gegen Ende von Schritt c) vorteilhaft, wenn der wenigstens eine Formkörpergrünling und/oder der gebrannte grobkeramische Formkörper bereits eine definierte Oberflächentemperatur aufweist, die nötig ist um den Brennvorgang durchzuführen.

Dadurch kann der Brennvorgang in Schritt c) des wenigstens einen Formkörpergrünlings besser kontrolliert werden. Vorzugsweise können dadurch ebenfalls thermische Spannungen im Formkörpergrünling zumindest teilweise reduziert werden. Des Weiteren kann beispielsweise durch eine Leistungsspitze der Sinterprozess relativ energiesparend vervollständigt werden.

Vorzugsweise wird in Schritt c), insbesondere in der zumindest einen Aufwärmphase und/oder dem zumindest einen Temperaturplateau, elektromagnetische Strahlung mit einer Frequenz von 300 MHz (Wellenlänge: ca. 1000 mm) bis 300 GHz (Wellenlänge: ca. 1 mm), bevorzugt mit von 600 MHz (Wellenlänge: ca. 500 mm) bis 6000 MHz (Wellenlänge: ca. 50 mm), weiter bevorzugt von 700 MHz (Wellenlänge: ca. 428 mm) bis 4300 MHz (Wellenlänge: ca. 70 mm), noch weiter bevorzugt von 730 MHz (Wellenlänge: ca. 411 mm) bis 4000 MHz (Wellenlänge: ca. 75 mm), ferner noch weiter bevorzugt von 850 MHz (Wellenlänge: ca. 353 mm) bis 3000 MHz (Wellenlänge: ca. 100 mm), verwendet. Besonders bevorzugt sind die Frequenzen von 915 MHz ± 50 MHz (Wellenlänge: ca. 328 mm), bevorzugt von 915 MHz ± 10 MHz, und 2450 MHz ± 50 MHz (Wellenlänge: ca. 122 mm), bevorzugt 2450 MHz ± 10 MHz.

Bei einer Ausführungsform des erfindungsgemäßen Verfahrens werden in Schritt c) bevorzugt zwei oder mehrere Frequenzen, weiter bevorzugt zwei Frequenzen, ausgewählt aus einem Bereich von 300 MHz bis 300 GHz, bevorzugt von 600 MHz bis 6000 MHz, weiter bevorzugt von 700 MHz bis 4300 MHz, noch weiter bevorzugt von 730 MHz bis 4000 MHz, ferner noch weiter bevorzugt von 850 MHz bis 3000 MHz, verwendet. Vorzugsweise werden die Frequenzen 915 MHz ± 50 MHz und 2450 MHz ± 50 MHz, weiter bevorzugt 915 MHz ± 10 MHz und 2450 MHz ± 10 MHz, verwendet.

Dadurch kann in Schritt c) das Erwärmen des wenigstens einen Formkörpergrünlings besser kontrolliert werden.

Schritt c) wird bevorzugt über einen Zeitraum ausgewählt aus einem Bereich von 20 min bis 400 min, weiter bevorzugt von 30 min bis 235 min, noch weiter bevorzugt von 40 min bis 150 min, noch weiter bevorzugt von 50 min bis 105 min, durchgeführt, insbesondere in dem der wenigstens eine Formkörpergrünling mit elektromagnetischer Strahlung beaufschlagt wird.

Bei einer bevorzugten Ausführungsform der Erfindung wird der wenigstens eine Formkörpergrünling zumindest zu Beginn von Schritt c) mit einer Umhüllung, vorzugsweise vollständig oder bereichsweise, umgeben.

Die Umhüllung ist vorzugweise gegenüber elektromagnetischer Strahlung mit einer Frequenz von 300 MHz bis 300 GHz zumindest teilweise, bevorzugt zu mindestens 20 %, weiter bevorzugt zu mindestens 50 %, noch weiter bevorzugt zu mindestens 70 %, ferner noch weiter bevorzugt zu mindestens 90 %, durchlässig.

Weiter weist die Umhüllung vorzugsweise eine geringe Wärmeleitfähigkeit auf. Vorzugsweise weist die Umhüllung eine Wärmeleitfähigkeit, bevorzugt bei 1000 °C und trockener Atmosphäre, ausgewählt aus einem Bereich von mehr als 0 W/(m·K) bis 0,30 W/(m·K), weiter bevorzugt von 0,05 W/(m·K) bis 0,25 W/(m·K), noch weiter bevorzugt von 0,1 W/(m·K) bis 0,18 W/(m·K), auf.

Vorzugsweise steht die Umhüllung zumindest teilweise in direkten Kontakt mit dem wenigstens einen Formkörpergrünling. Die Umhüllung kann derart gestaltet sein, dass sie eine stützende und/oder unterstützende Funktion in Bezug auf den wenigstens einen Formkörpergrünling aufweist, wobei insbesondere die Form des wenigstens einen Formkörpergrünlings in Schritt c) geschützt, beibehalten und/oder beeinflusst wird. Beispielsweise kann die Umhüllung als Form gestaltet sein, in die der wenigstens eine Formkörpergrünling eingelegt wird, oder die über den wenigstens einen Formkörpergrünling gestülpt wird.

Es ist möglich, dass die Umhüllung von dem Trägerelement und/oder der Vorrichtung in der das Verfahren durchgeführt wird, umfasst wird. Insbesondere ist es möglich, dass die Umhüllung Wände und/oder Deckel eines Trägerelements in Form einer Schachtel oder Kiste bildet und/oder von diesen umfasst wird.

Vorzugsweise umfasst die Umhüllung wenigstens ein keramisches, bevorzugt nichtoxidkeramisches und/oder oxidkeramisches Material, insbesondere Aluminiumoxid und/oder Mullit, dass weiter bevorzugt in Form von Fasern, Fäden, Wolle, Vlies, und/oder als Faserverbund und/oder als Matte und/oder als Platte vorliegt.

Die Umhüllung dämmt bevorzugt den Wärmeverlust des wenigstens einen Formkörpergrünlings und ist vorzugsweise gegenüber Wärmestrahlung nur teilweise durchlässig, vorzugsweise undurchlässig. Hierbei kann der wenigstens eine Formkörpergrünling mit elektromagnetischer Strahlung durch die Umhüllung hindurch beaufschlagt und somit erwärmt werden, wobei die Umhüllung dabei eine Abgabe von Wärmestrahlung an die den wenigstens einen umhüllten zumindest teilweise getrockneten Formkörpergrünling umgebende Gasphase reduziert. Dadurch kann der zumindest für Schritt c) benötigte Energiebedarf, um den wenigstens einen Formkörpergrünling auf die gewünschte Temperatur zu erwärmen, reduziert werden. Weiter werden dadurch auch weitere Elemente der Vorrichtung in der das erfindungsgemäße Verfahren durchgeführt wird, besser vor einer zu starken thermischen Belastung geschützt.

Die Umhüllung kann auf der Innenseite wenigstens einen Mikrowellen-Suszeptor aufweisen, bevorzugt in Form einer Beschichtung. Die Dicke oder Stärke des wenigstens einen Mikrowellen-Suszeptor, insbesondere der Beschichtung, ist bevorzugt ausgewählt aus einem Bereich von 0,1 mm bis 5 mm, weiter bevorzugt von 0,2 mm bis 4 mm. Hierdurch wird die elektromagnetische Strahlung nur teilweise vom wenigstens einen Mikrowellen-Suszeptor absorbiert, wobei der überwiegende Teil der Strahlung, insbesondere zumindest 50 %, den wenigstens einen Formkörpergrünling und/oder gebrannten grobkeramischen Formkörper erreicht.

Bei einer bevorzugten Ausführungsform von Schritt c) weist der wenigstens eine Formkörpergrünling zu Beginn von Schritt c) einen Feuchtegehalt ausgewählt aus einem Bereich von mehr als 0 Gew.-% bis 1 Gew.-%, weiter bevorzugt von 0,1 Gew.-% bis 0,5 Gew.-%, auf, jeweils bezogen auf das Trockengewicht des wenigstens einen Formkörpergrünlings zu Beginn von Schritt c), wobei der wenigstens eine Formkörpergrünling in Schritt c) mit elektromagnetischer Strahlung mit einer mittleren Leistungsdichte ausgewählt aus einem Bereich von 500 W/kg bis 4000 W/kg, bevorzugt von 700 W/kg bis 3500 W/kg, weiter bevorzugt von 750 W/kg bis 3000 W/kg, beaufschlagt wird, jeweils bezogen auf das Trockengewicht des zu Beginn von Schritt c) vorliegenden wenigstens einen Formkörpergrünlings. Bei dieser bevorzugten Ausführungsform wird Schritt c) derart durchgeführt, dass der wenigstens eine gebrannte grobkeramische Formkörper am Ende von Schritt c) zumindest teilweise eine Oberflächentemperatur ausgewählt aus einem Bereich von 800 °C bis 1600 °C, bevorzugt von 900 °C bis 1400 °C, weiter bevorzugt von 1000 °C bis 1200 °C, aufweist, wobei die zumindest eine Aufwärmphase in Schritt c) über einen Zeitraum ausgewählt aus einem Bereich von 10 min bis 300 min, bevorzugt von 15 min bis 160 min, weiter bevorzugt von 20 min bis 90 min, noch weiter bevorzugt 25 min bis 60 min durchgeführt wird, und wobei Schritt c) zumindest ein Temperaturplateau aufweist, wobei das zumindest eine Temperaturplateau in Schritt c) über einen Zeitraum ausgewählt aus einem Bereich von 10 min bis 100 min, weiter bevorzugt von 15 min bis 75 min, noch weiter bevorzugt von 20 min bis 60 min, ferner noch weiter bevorzugt von 25 min bis 45 min, gehalten wird, insbesondere indem der wenigstens eine Formkörpergrünling mit elektromagnetischer Strahlung beaufschlagt wird.

Der wenigstens eine durch das Verfahren, bevorzugt in Schritt c), weiter bevorzugt nach dem Abkühlen auf Raumtemperatur und/oder Schritt d), erhaltene gebrannte grobkeramischer Formkörper, weist zumindest bereichsweise ausgebildete feste Sinterbrücken zwischen den im Formkörper enthaltenen Partikeln auf.

Der wenigstens eine in Schritt c) erhaltene gebrannte grobkeramische Formkörper umfasst gebrannten Ton und/oder gebrannten Lehm sowie optional Zuschlägen. Vorzugweise besteht der gebrannte grobkeramische Formkörper aus gebranntem Ton und/oder gebranntem Lehm sowie optional Zuschlägen.

Das Kernmaterial und der Randbereich des wenigstens einen in Schritt c) erhaltenen gebrannten grobkeramischen Formkörpers weisen ein bevorzugtes spezifisches Porenvolumen auf, wobei das spezifische Porenvolumen des Kernmaterials um nicht mehr als 8 %, vorzugsweise um nicht mehr als 6 %, größer ist als das spezifische Porenvolumen des Randbereichs, wobei das spezifische Porenvolumen jeweils durch eine Methode nach DIN ISO 15901-1:2019-03 (Englischer Titel: "Evaluation of pore size distribution and porosity of solid materials by mercury porosimetry and gas adsorption - Part 1: Mercury porosimetry (ISO 15901-1:2016)", Deutscher Titel: "Bewertung der Porengrößenverteilung und Porosität von Feststoffen mittels Quecksilberporosimetrie und Gasadsorption - Teil 1: Quecksilberporosimetrie (ISO 15901-1:2016)", Ausgabedatum: 2019-03) bestimmt wird.

Mit anderen Worten wird vorteilhafterweise durch das erfindungsgemäße Verfahren wenigstens ein gebrannter grobkeramischer Formkörper erhalten, der - im Vergleich zu einem konventionell hergestellten Formkörper - eine gleichmäßigere Struktur aufweist. Dies kann einerseits die Größe der Poren und deren Verteilung innerhalb des Kernmaterials an sich betreffen. Andererseits kann auch die Verteilung der Poren über den wenigstens einen gesamten Formkörper, also im Randbereich und im Kernbereich gleichmäßiger sein. Hierdurch kann der wenigstens eine durch das Verfahren erhaltene Formkörper weniger innere Spannungen aufweisen.

In Schritt c) wird der wenigstens eine gebrannte grobkeramische Formkörper in Form eines Dachziegels, einer Fassadenplatte, eines Klinkerstein oder ein Ziegelstein erhalten.

Der Dachziegel kann in Form eines Hohlpfannenziegels, eines Biberschwanzziegels, eines Doppelmuldenfalzziegels, eines Falzziegels, eines Reformziegels, eines Flachdachziegels, eines Mönchziegels, eines Nonnenziegels, eines Krempziegel, etc. erhalten werden.

Der Ziegelstein oder der Klinkerstein kann in Form eines Vollsteins, Mauerziegels, Lochziegels, Außenwandziegels, Innenwandziegels, Schallschutzziegels, Kellerziegels, etc. erhalten werden.

Vorzugsweise weist das Verfahren einen Schritt d) des Kühlens auf, wobei Schritt d) bevorzugt nach dem optionalen Schritt b) und/oder nach Schritt c) durchgeführt wird:

d) Kühlen des Formkörpergrünlings und/oder des gebrannten grobkeramischen Formkörpers.

Schritt d) erfolgt durch das Einblasen von Gas, wobei erwärmtes Gas erhalten wird. Hierdurch wird die den wenigstens einen Formkörpergrünling und/oder gebrannten grobkeramischen Formkörper umgebende Gasphase ausgetauscht. Hierbei ist es möglich, dass das erhaltene erwärmte Gas abgesaugt und/oder durch eingeblasenes Gas verdrängt wird. Vorzugsweise wird als eingeblasenes Gas Luft und/oder Luftgemisch verwendet.

Schritt d) bietet den Vorteil, dass das Kühlen des Formkörpergrünlings aktiv gesteuert und beschleunigt wird im Vergleich zu einem passiven Abkühlen ohne zusätzlichen Einblasen von Gas.

Das Gas wird bevorzugt mittels zumindest einer Austrittsdüse in die Vorrichtung eingeblasen, insbesondere wobei die zumindest eine Austrittsdüse direkt auf den wenigstens einen Formkörpergrünling und/oder gebrannten grobkeramischen Formkörper gerichtet wird. Alternativ oder zusätzlich wird die zumindest eine Austrittdüse nicht direkt auf den wenigstens einen Formkörpergrünling und/oder gebrannten grobkeramischen Formkörper gerichtet.

Es ist möglich, dass das in Schritt d) erhaltene erwärmte Gas, verwendet wird, um einen weiteren Formkörpergrünling zu erwärmen, bevorzugt zumindest teilweise zu trocknen. Bevorzugt wird das erhaltene erwärmte Gas einem weiteren Formkörpergrünling in Schritt b) und/oder in Schritt c) zugeführt. Der weitere Formkörpergrünling kann in der gleichen Vorrichtung oder einer weiteren Vorrichtung, insbesondere Kammer, Modul, Segment und/oder Tunnel, angeordnet sein. Vorzugsweise weist das erhaltene erwärmte Gas eine Temperatur ausgewählt aus einem Bereich 80 °C bis 300 °C, weiter bevorzugt von 90 °C bis 250 °C, auf.

Hierdurch kann weiter der $CO_2$-Fussabdruck eines durch das Verfahren wenigstens einen hergestellten gebrannten grobkeramischen Formkörpers reduziert werden.

Es ist möglich, dass der wenigstens eine Formkörpergrünling und/oder der gebrannte grobkeramische Formkörper in Schritt d) in zumindest einer Abkühlphase mit einer mittleren Temperaturänderungsrate $\frac{\Delta T_{d)}}{\Delta t_{d)}}$ von wenigstens -5 K/min, bevorzugt von wenigstens - 8,3 K/min, weiter bevorzugt von wenigstens -11,1 K/min, gekühlt wird.

Die zumindest eine Abkühlphase von Schritt d) beginnt mit dem Beginn von Schritt d) und/oder nach einem Temperaturplateau. Mit dem Ende von Schritt d) und/oder dem Beginn eines Temperaturplateaus in Schritt d) endet die zumindest eine Abkühlphase.

Vorzugsweist wird der wenigstens eine Formkörpergrünling in Schritt d) in der zumindest einen Abkühlphase mit einer mittleren Temperaturänderungsrate $\frac{\Delta T_{d)}}{\Delta t_{d)}}$ aus einem Bereich von -5 K/min bis -35 K/min, bevorzugt von -8,3 K/min bis -25 K/min, noch weiter bevorzugt von - 11,1 K/min bis -15 K/min, gekühlt.

Es ist möglich, die mittlere Temperaturänderungsrate der zumindest einen Abkühlphase in Schritt d) wie vorstehend dargelegt durch Gleichung (1) zu ermitteln.

Zur Bestimmung der mittleren Temperaturänderungsrate $\frac{\Delta T_{d)}}{\Delta t_{d)}}$ in Schritt d) kann $T_1$ der Oberflächentemperatur des wenigstens einen Formkörpergrünlings und/oder gebrannten grobkeramischen Formkörpers zu Beginn der zumindest einen Abkühlphase von Schritt d) entsprechen, wobei $t_1$ somit als 0 min gewertet werden kann. Weiter kann $T_2$ hierbei der Oberflächentemperatur des wenigstens einen Formkörpergrünlings und/oder gebrannten grobkeramischen Formkörpers zu dem Zeitpunkt $t_2$ der zumindest einen Abkühlphase von Schritt d) entsprechen, wobei $t_2$ und somit $\Delta t_{d)}$ der Dauer der zumindest einen Abkühlphase von Schritt d) entspricht. Da in Schritt d) gekühlt wird, ist das Vorzeichen der mittleren Temperaturänderungsrate der zumindest einen Abkühlphase negativ.

Weist Schritt d) nur eine Abkühlphase auf, so kann $T_1$ als die Oberflächentemperatur des wenigstens einen Formkörpergrünlings und/oder des gebrannten grobkeramischen Formkörpers zu Beginn von Schritt d) angenommen werden. $T_2$ entspricht dann der Oberflächentemperatur des wenigstens einen Formkörpergrünlings und/oder gebrannten grobkeramischen Formkörpers am Ende von Schritt d), wobei das Zeitintervall $\Delta t_{d)}$ der Dauer von Schritt d) entspricht.

Das Kühlen des wenigstens einen Formkörpergrünlings und/oder gebrannten grobkeramischen Formkörpers in der zumindest einen Abkühlphase in Schritt d) kann im Wesentlichen als Funktion ausgewählt aus der Gruppe Gerade, Wurzelfunktion, Exponentialfunktion, Potenzfunktion, Logarithmusfunktion oder Kombinationen davon, beschrieben werden. Vorzugsweise erfolgt das Erwärmen des wenigstens einen Formkörpergrünlings im Wesentlichen linear.

Weiter ist es möglich, dass Schritt d) zwei oder mehrere Abkühlphasen umfasst, wobei die Abkühlphasen jeweils unabhängig voneinander mittlere Temperaturänderungsraten aufweisen. So ist es möglich, dass die mittlere Temperaturänderungsrate der ersten Abkühlphase des Schritts d) größer oder kleiner ist als die mittlere Temperaturänderungsrate der zweiten Abkühlphasen des Schritts d).

Bevorzugt erfolgt Schritt d) stufenweise oder kontinuierlich. Es ist möglich, dass Schritt d) zumindest ein Temperaturplateau aufweist. In dem zumindest einen Temperaturplateau von Schritt b) wird die Oberflächentemperatur des wenigstens einen Formkörpergrünlings und/oder gebrannten grobkeramischen Formkörpers über einen spezifischen Zeitraum im Mittel im Wesentlichen konstant, bevorzugt bei einer Schwankungsbreite von $\pm 20$ °C, gehalten und/oder die gegenwertige mittlere Temperaturänderungsrate auf weniger als $\pm 4$ K/min, im Wesentlichen auf 0 K/min, gesetzt.

Das zumindest eine Temperaturplateau in Schritt d) wird bevorzugt über einen Zeitraum von maximal 60 min, bevorzugt von maximal 45 min, gehalten, insbesondere währenddessen der wenigstens eine Formkörpergrünling und/oder gebrannte grobkeramische Formkörper mit elektromagnetischer Strahlung beaufschlagt wird. Weiter bevorzugt wird das zumindest eine Temperaturplateau in Schritt c) über einen Zeitraum ausgewählt aus einem Bereich von 10 min bis 60 min, weiter bevorzugt von 15 min bis 45 min, noch weiter bevorzugt von 20 min bis 40 min, gehalten, insbesondere währenddessen der wenigstens eine Formkörpergrünling und/oder gebrannte grobkeramische Formkörper mit elektromagnetischer Strahlung beaufschlagt wird.

Es ist möglich, dass das zumindest eine Temperaturplateau in Schritt d) bei einer Oberflächentemperatur des wenigstens einen Formkörpergrünlings und/oder des gebrannten grobkeramischen Formkörpers ausgewählt aus einem Bereich von 650 °C bis 500 °C, bevorzugt von 600 °C bis 550 °C, weiter bevorzugt von 585 °C bis 565 °C, gehalten wird.

Es ist möglich, dass das zumindest eine Temperaturplateau zwischen einer ersten Abkühlphase des Schritts d) und einer zweiten Abkühlphase des Schritts d) angeordnet ist. Hierbei ist es möglich, dass die mittlere Temperaturänderungsrate der ersten Abkühlphase des Schritts d) größer, kleiner oder gleich ist als die mittlere Temperaturänderungsrate der zweiten Abkühlphase des Schritts d).

Durch das zumindest eine Temperaturplateau kann ein Auftreten von mechanischen Spannungen innerhalb des wenigstens einen gebrannten grobkeramischen Formkörpers und/oder Formkörpergrünlings verhindert werden.

Es ist möglich, dass Schritt d) derart durchgeführt wird, dass der wenigstens eine Formkörpergrünling und/oder gebrannte grobkeramische Formkörper am Ende von Schritt d) zumindest teilweise eine Oberflächentemperatur ausgewählt aus einem Bereich von 25 °C bis 200 °C, bevorzugt von 50 °C bis 150 °C, weiter bevorzugt von 75 °C bis 120 °C, aufweist.

Es ist möglich, dass Schritt d), bevorzugt die zumindest eine Abkühlphase in Schritt d), über einen Zeitraum von maximal 300 min, bevorzugt von 180 min, weiter bevorzugt von 120 min, noch weiter bevorzugt von maximal 90 min, durchgeführt wird. Es ist möglich, dass Schritt d) über einen Zeitraum ausgewählt aus einem Bereich von 10 min bis 300 min, bevorzugt von 20 min bis 180 min, weiter bevorzugt von 30 min bis 120 min, noch weiter bevorzugt von 45 min bis 90 min, durchgeführt wird.

Es ist möglich, dass der wenigstens eine zumindest teilweise getrocknete Formkörpergrünling nach Schritt b) entnommen und gelagert wird, bevor er in Schritt c) gebrannt wird.

Es ist möglich, dass Schritt b) und Schritt c) kombiniert durchgeführt werden, wobei zunächst der wenigstens eine in Schritt a) bereitgestellte Formkörpergrünling gemäß dem oben beschriebenen Verfahren getrocknet, vorzugsweise unter Beaufschlagen mit elektromagnetischer Strahlung mit einer Frequenz von 300 MHz bis 300 GHz, wird. Anschließend wird der wenigstens eine zumindest teilweise getrocknete Formkörpergrünling unter Beaufschlagen mit der zuvor beschriebenen elektromagnetischen Strahlung mit einer Frequenz von 300 MHz bis 300 GHz gebrannt. Insbesondere ist die in Schritt b) auf das Trockengewicht des wenigstens einen Formkörpergrünlings zu Beginn von Schritt b) bezogene mittlere Leistungsdichte der applizierten elektromagnetischen Strahlung geringer als die in Schritt c) auf das Trockengewicht des wenigstens einen Formkörpergrünlings zu Beginn von Schritt c) bezogene mittlere Leistungsdichte.

Weiter ist die Oberflächentemperatur des wenigstens einen Formkörpergrünlings in Schritt b) geringer als die des wenigstens einen Formkörpergrünlings in Schritt c). Weiter bevorzugt können zwischen Schritt b) und Schritt c) ein oder mehrere Temperaturplateaus gehalten werden.

Weiter kann die Dauer der Beaufschlagung mit elektromagnetischer Strahlung in Schritt b) kürzer sein als die Dauer in Schritt c).

Weiter bevorzugt kann während einer kombinierten Durchführung von Schritt b) und Schritt c) die mittlere Leistungsdichte, insbesondere der elektromagnetischen Strahlung, mit der der wenigstens eine Formkörpergrünling beaufschlagt wird, kontinuierlich und/oder stufenweise erhöht werden. Es ist möglich, dass dabei in Schritt b), und/oder zwischen Schritt b) und Schritt c), und/oder in Schritt c) zumindest ein Leistungsdichteplateau und/oder Temperaturplateau gehalten wird. Die Leistungsdichte ist auf das Trockengewicht des wenigstens einen Formkörpergrünlings zu Beginn des jeweiligen Schritt b) oder Schritt c) bezogen.

Bei einer bevorzugten Ausführungsform wird in Schritt b) und Schritt c) elektromagnetische Strahlung mit einer Frequenz ausgewählt aus einem Bereich von 300 MHz bis 300 GHz, bevorzugt von 600 MHz bis 6000 MHz, weiter bevorzugt von 700 MHz bis 4300 MHz, noch weiter bevorzugt von 730 MHz bis 4000 MHz, ferner noch weiter bevorzugt von 850 MHz bis 3000 MHz, verwendet. Besonders bevorzugt sind die Frequenzen von 915 MHz $\pm$ 50 MHz, bevorzugt von 915 MHz $\pm$ 10 MHz, und 2450 MHz $\pm$ 50 MHz, bevorzugt 2450 MHz $\pm$ 10 MHz. Weiter bevorzugt beträgt die Frequenz der in Schritt b) und/oder Schritt c) verwendeten elektromagnetischen Strahlung jeweils unabhängig voneinander 915 MHz $\pm$ 50 MHz, bevorzugt 915 MHz $\pm$ 10 MHz, und 2450 MHz $\pm$ 50 MHz, bevorzugt 2450 MHz $\pm$ 10 MHz.

Bevorzugt wird in Schritt b) und/oder Schritt c) zur Erzeugung von elektromagnetischer Strahlung wenigstens eine, vorzugsweise werden zwei oder mehr, Vorrichtung(en) zur Erzeugung von elektromagnetischer Strahlung der oben angegebenen Frequenzen verwendet.

Beispielsweise können in Schritt b) und/oder Schritt c) ein oder mehrere Vorrichtungen zur Erzeugung von elektromagnetischer Strahlung der oben angegebenen Frequenz(en) verwendet werden, die jeweils unabhängig voneinander unterschiedliche oder gleiche Frequenzen erzeugen.

Bei einer bevorzugten Ausführungsform der Erfindung kann die Leistungsdichte mit der der wenigstens eine Formkörpergrünling beaufschlagt wird in Schritt b) und in Schritt c) zueinander unterschiedlich sein. Abhängig von der Zusammensetzung und Stärke des wenigstens einen optional zu trocknenden und zu brennenden Formkörpergrünlings kann somit dessen Erwärmung kontrolliert werden. Insbesondere bei Formkörpergrünlingen mit einem größeren Anteil an Kernmaterial ist somit eine diffusionskontrollierte Trocknung möglich und verringert dadurch beispielsweise Spannungen, Verformungen, Abplatzungen und/oder Risse.

Es ist möglich, dass das Verfahren wenigstens einen Schritt e) der Oberflächenbeschichtung aufweist, wobei Schritt e) nach Schritt a) und/oder nach dem optionalen Schritt b) und/oder nach Schritt c) und/oder nach Schritt d) durchgeführt wird:

e) Aufbringen wenigstens einer Oberflächenbeschichtung, vorzugsweise einer luftreinigenden Oberflächenbeschichtung und/oder einer selbstreinigenden Oberflächenbeschichtung, auf wenigstens einem Teilbereich wenigstens einer Oberfläche des wenigstens einen Formkörpergrünlings und/oder des wenigstens einen zumindest teilweise getrockneten Formkörpergrünlings und/oder des wenigstens einen gebrannten grobkeramischen Formkörpers.

Wird Schritt e) nach Schritt a) durchgeführt, wird die Oberflächenbeschichtung des wenigstens einen Formkörpergrünling aufgebracht. Wird Schritt e) nach Schritt b) durchgeführt, wird die Oberflächenbeschichtung auf dem wenigstens einen zumindest teilweise getrockneten Formkörpergrünling aufgebracht. Wird Schritt e) nach Schritt c) durchgeführt wird die Oberflächenbeschichtung auf dem wenigstens einen gebrannten grobkeramischen Formkörper aufgebracht. Bevorzugt wird Schritt e) nach Schritt c) durchgeführt.

Wird Schritt e) durchgeführt, wird wenigstens ein gebrannter grobkeramischer Formkörper erhalten, der auf wenigstens einem Teilbereich wenigstens einer Oberfläche wenigstens eine Oberflächenbeschichtung aufweist.

Die Oberflächenbeschichtung kann einschichtig oder mehrschichtig angeordnet werden. Die Oberflächenbeschichtung kann auf wenigstens einem Teilbereich der Oberfläche oder vollflächig auf wenigstens einer Oberfläche oder vollflächig auf der gesamten Oberfläche angeordnet werden.

Bei einer alternativen Ausführungsform wird die Oberflächenbeschichtung lediglich auf einem Teilbereich wenigstens einer Oberfläche und/oder der wenigstens einen Oberfläche angeordnet, die der wenigstens einen Oberfläche des wenigstens einen gebrannten grobkeramischen Formkörpers entspricht, die und/oder der beispielsweise bei der späteren Verwendung dem Sonnenlicht, dem Niederschlag und/oder den Abgasen in der Luft ausgesetzt ist/sind.

Die Oberflächenbeschichtung kann getrocknet und/oder gehärtet und/oder gebrannt ausgebildet werden. Vorzugsweise wird die Oberflächenbeschichtung mit den in Schritt b) beschriebenen Parametern getrocknet und/oder mit den Schritt c) beschriebenen Parametern gehärtet und/oder gebrannt.

Es ist möglich, dass die Oberflächenbeschichtung zumindest teilweise während Schritt b) und/oder in einem weiteren nach Schritt b) durchgeführten Schritt getrocknet wird.

Es ist möglich, dass die Oberflächenbeschichtung zumindest teilweise während Schritt c) und/oder in einem weiteren nach Schritt c) durchgeführten Schritt getrocknet und/oder gehärtet und/oder gebrannt wird.

Es ist möglich, dass die Oberflächenbeschichtung, in Form wenigstens einer Schicht aus einer Dispersion und/oder einer Glasur und/oder einer Engobe, auf dem wenigstens einen Formkörpergrünling und/oder gebrannten grobkeramischen Formkörper angeordnet wird.

Das Anordnen der Oberflächenbeschichtung erfolgt bevorzugt mittels eines Verfahrens ausgewählt aus der der Gruppe, die Vorhangbeschichtung, Sprühbeschichtung, Schleuderbeschichtung, oder Kombinationen davon, besteht.

Vorzugsweise wird die Oberflächenbeschichtung bei einer Temperatur ausgewählt aus einem Bereich von 20 °C bis 1600 °C getrocknet und/oder gehärtet und/oder gebrannt. Weiter bevorzugt wird die Oberflächenbeschichtung bei einer Temperatur ausgewählt aus einem Bereich von 100 °C bis 180 °C getrocknet und/oder bei einer Temperatur ausgewählt aus einem Bereich von 150 °C bis 1200 °C gehärtet und/oder gebrannt.

Weiter bevorzugt wird eine Oberflächenbeschichtung mit einer Trockenschichtdicke aus einem Bereich von 0,1 nm bis 200 nm, vorzugsweise von 40 nm bis 150 nm, auf dem wenigstens einen Formkörpergrünling und/oder gebrannten grobkeramischen Formkörper zumindest in einem Teilbereich aufgebracht.

Die Oberflächenbeschichtung kann beispielsweise wenigstens ein organisches oder anorganisches Bindemittel aufweisen. Vorzugsweise wird das anorganische Bindemittel aus der Gruppe, bestehend aus Wasserglas, Kieselsäure, deren Derivaten und Mischungen davon, ausgewählt.

Unter dem Begriff "Bindemittel" wird erfindungsgemäß ein Stoff verstanden, der vorzugsweise an der Phasengrenze anderer Stoffe chemische Bindungen herstellt und/oder begünstigt und/oder zumindest physikalische Effekte wie beispielsweise Kohäsion, Adsorption, Adhäsion und/oder Reibung auslöst und/oder vergrößert. In der Regel verbinden Bindemittel andere Stoffe, indem sie beispielsweise diese aufnehmen, zusammenhalten, vernetzen und/oder verkleben und/oder sich an diesen anlagern.

Es ist möglich, dass die wenigstens eine Oberflächenbeschichtung in Form einer Engobe und/oder einer Glasur ausgebildet wird. Beispielsweise kann eine Engobe und/oder Glasur in Kontakt mit wenigstens einem Teilbereich wenigstens einer Oberfläche des wenigstens einen gebrannten grobkeramischen Formkörpers angeordnet werden.

Eine Glasur ist eine glasartige, vorzugsweise geschlossene, Oberflächenschicht. Vorzugsweise weist eine Glasur eine Trockenschichtdicke aus einem Bereich von 5 $\mu$m bis 500 $\mu$m, weiter bevorzugt von 5 $\mu$m bis 100 $\mu$m, auf, die zumindest auf einem Teilbereich wenigstens einer Oberfläche des wenigstens einen Formkörpergrünling und/oder des gebrannten grobkeramischen Formkörper aufgebracht wird.

Die Glasur schmilzt bevorzugt bei einer Temperatur ausgewählt aus einem Bereich von 800 °C bis 1300 °C, weiter bevorzugt von 900 °C bis 1100 °C. Die Glasur gleicht vorzugsweise die Rauigkeit oder gegebenenfalls vorhandene Poren der Oberfläche des wenigstens einen Formkörpers aus.

Bei einer Ausführungsform ist die Glasur nach dem Brennen oder Härten wasserundurchlässig, jedoch vorzugsweise aufgrund einer Mikroporosität für Wasserdampf noch durchlässig, so dass die ursprünglichen Eigenschaften des wenigstens einen durch das erfindungsgemäße Verfahren erhaltenen gebrannten grobkeramischen Formkörpers hinsichtlich der Wasserdampfdurchlässigkeit nicht eingeschränkt sind.

Vorzugsweise wird die Glasur zu Dekorzwecken aufgebracht und kann in Farbe, Transparenz, Opazität und/oder Glanz variiert werden.

Bei einer bevorzugten Ausführungsform umfasst die Glasur, bezogen auf das Trockengewicht der Glasur vor dem Brennen, 50 Gew.-% bis 80 Gew.-% Glasfritte, 10 Gew.-% bis 40 Gew.-% ungebrannten Ton und/oder Kaolin sowie 0 Gew.-% bis 40 Gew.-% Farbpigmenten und/oder Trübungsmittel.

Die Glasfritte ist erfindungsgemäß ein niedrigschmelzendes Glaspulver, welches aus einer $SiO_2$-Schmelze unter Zusatz von schmelzpunkterniedrigenden Oxiden, wie $Li_2O$, $Na_2O$, $K_2O$, $B_2O_3$, CaO, BaO, $Bi_2O_3$, und/oder ZnO, aufweist.

Als Trübungsmittel werden vorzugsweise hochschmelzende Oxide, wie z. B. $Al_2O_3$, $SnO_2$, $ZrO_2$, $As_2O_3$, $As_2O_5$, $CeO_2$, $WO_3$, $V_2O_3$, und/oder $V_2O_5$ verwendet, welche vorzugsweise nicht schmelzen und somit weiter bevorzugt gleichmäßig als Partikel in der Glasur, vorzugsweise nach dem Brennen und/oder Härten, verteilt sind.

Als Farbpigmente können vorzugsweise farbige Metalloxide, wie die CoO, $Co_2O_3$, $Co_3O_4$, NiO, $Ni_2O_3$, CuO, $Cr_2O_3$, $UO_2$, $UO_3$, $Sb_2O_3$, $Sb_2O_5$, $MnO_2$, $TiO_2$, FeO, $Fe_2O_3$, $Fe_3O_4$, MgO, BeO, SrO, $SeO_3$, $Er_2O_3$, und/oder $Sb_2O_3$, oder bei Giftigkeit bereits verkapselte Metalloxide, einzeln oder in einem Mischungsverhältnis zugegeben werden, so dass eine gewünschte Farbe erhalten wird.

Die Engobe von engobierten Formkörpern wird vorzugsweise gebildet aus einer Mischung, die Ton und/oder Kaolin und/oder Bentonit ausgewählt aus einem Bereich von 60 Gew.-% bis 100 Gew.-% und gegebenenfalls einer Glasfritte ausgewählt einem Bereich von 0 Gew.- % bis 40 Gew.-%. Die vorstehenden Angaben sind bezogen auf das Trockengewicht der Engobe vor dem Brennen oder Härten, wobei die Gewichtsangaben so gewählt sind, dass sie in Summe 100 Gew.-% ergeben.

Bei einer bevorzugten Ausführungsform wird die Oberflächenbeschichtung als Oberflächenbeschichtung mit selbstreinigenden Eigenschaften und/oder luftreinigenden Eigenschaften aufgebracht.

Unter dem Begriff "selbstreinigende Oberflächenbeschichtung" wird erfindungsgemäß verstanden, dass sich auf der Oberflächenbeschichtung ablagernde Schimmel, Pilzhüfen, Pflanzenwuchs, beispielsweise Moos und/oder Algen, bakterielle Verunreinigungen und/oder Verunreinigungen aus Industrieanlagen photochemisch abgebaut und entfernt werden. Die selbstreinigende Oberflächenbeschichtung oxidiert die genannten Stoffe bzw. Verunreinigungen, wodurch diese ein vermindertes Haftungsvermögen auf der entsprechend ausgestalteten Oberflächenbeschichtung aufweisen und bevorzugt bei Beregnung bzw. bei Berieselung mit Wasser leicht von der beschichteten Oberfläche des gebrannten grobkeramischen Formkörpers abgespült werden.

Unter dem Begriff "luftreinigende Oberflächenbeschichtung" wird erfindungsgemäß verstanden, dass auf der Oberflächenbeschichtung Luftschadstoffe, beispielsweise wie Stickoxide, Schwefeloxide und andere oxidierbare Gase, photochemisch abgebaut und/oder entfernt werden. Insbesondere oxidiert die luftreinigende Oberflächenbeschichtung die Luftschadstoffe. Die gebildeten wasserlöslichen Salze können bevorzugt bei Beregnung bzw. bei Berieselung mit Wasser leicht von der beschichteten Oberfläche des gebrannten grobkeramischen Formkörpers abgespült werden.

Es ist möglich, dass das Verfahren, insbesondere die einzelnen Schritte des Verfahrens, kontinuierlich oder diskontinuierlich, bevorzugt getaktet, durchgeführt wird/werden. Es ist möglich, dass Schritt c) unmittelbar nach Schritt b) durchgeführt wird. Weiter ist es möglich, dass Schritt e) unmittelbar nach Schritt c) durchgeführt wird. Es ist möglich, dass Schritt b) und Schritt c), bevorzugt Schritt b), Schritt c), Schritt d) und Schritt e), weiter bevorzugt Schritt b), Schritt c), und Schritt d), zueinander getaktet durchgeführt werden.

Das Verfahren wird bevorzugt über einen Zeitraum von maximal 700 min, weiter bevorzugt von maximal 415 min, noch weiter bevorzugt von maximal 270 min, ferner noch weiter bevorzugt von maximal 195 min, durchgeführt.

Bevorzugt wird das Verfahren über einen Zeitraum ausgewählt aus einem Bereich von 10 min bis 700 min, weiter bevorzugt von 15 min bis 415 min, noch weiter bevorzugt von 30 min bis 270 min, ferner noch weiter bevorzugt von 45 min bis 195 min, durchgeführt. Unter vorstehenden Zeitraum wird die Prozesszeit des Verfahrens verstanden, welche das Durchlaufen und Abschließen aller vorgesehenen Schritte umfasst. Insbesondere beginnt die Prozesszeit mit dem Bereitstellen des wenigstens einen Formkörpergrünlings und endet beim Erhalt des angestrebten fertigen Produkts. Mit anderen Worten werden von dem vorstehenden Zeitraum des Verfahrens bevorzugt die Schritte a) und c), die Schritte a), c) und d), die Schritte a), b) und c), die Schritte a), b), c) und d), die Schritte a), c) und d), die Schritte a), c), d) und e), die Schritte a), b), c) und e), oder die Schritte a), b), c), d) und e), umfasst. Es ist möglich, dass zwischen den Schritten weitere Schritte durchgeführt werden. Weiter ist es möglich, dass Schritte jeweils einmal oder mehrmals durchgeführt werden.

Durch die kurzen Prozesszeiten ergeben sich die Vorteile, dass beispielsweise im Vergleich zu einem konventionellen Verfahren ein schnellerer Produktwechsel bis hin zur auftragsbezogenen Produktion ermöglicht wird.

Der Schritt c) des Verfahrens kann am gleichen Ort einer Vorrichtung, insbesondere Kammer, Modul, Segment und/oder Tunnel, wie Schritt b) durchgeführt werden. Hierbei ist es möglich, dass bei dem Wechsel von Schritt b) zu Schritt c) lediglich die eingestellten Parameter, beispielsweise die mittlere Leistungsdichte der applizierten elektromagnetischen Strahlung, die Oberflächentemperatur des wenigstens einen Formkörpergrünlings und/oder die Zeit mit der der wenigstens eine Formkörpergrünling mit elektromagnetischer Strahlung beaufschlagt wird, auf die für Schritt c) optimierten Parameter eingestellt werden.

Alternativ oder zusätzlich ist es möglich, dass bei dem Wechsel der Schritte, insbesondere von Schritt b) zu Schritt c), der wenigstens eine Formkörpergrünling an einen anderen Ort der Vorrichtung, insbesondere Kammer, Modul, Segment und/oder Tunnel, angeordnet, insbesondere transportiert, wird. Insbesondere ist der wenigstens eine Formkörpergrünling hierzu auf dem Trägerelement angeordnet. Der Transport des wenigstens einen Formkörpergrünlings, insbesondere des Trägerelements und des wenigstens einen Formkörpergrünlings, kann mittels zumindest einem Transportelement ausgewählt aus der Gruppe, die aus Transportband, Transportwalze, Schiene, Schubkolben und Zugkette oder Kombinationen davon, besteht, erfolgen.

Alternativ oder zusätzlich zu dem Transport des wenigstens einen Formkörpergrünling durch die Vorrichtung ist es auch möglich, dass die Vorrichtung zumindest in eine Raumrichtung beweglich, insbesondere mittels Schienen, angeordnet ist und während und/oder zwischen Schritten des Verfahrens relativ zum wenigstens einen Formkörpergrünling in zumindest eine Raumrichtung bewegt wird.

Weiter bevorzugt wird zur Erzeugung der elektromagnetischen Strahlung wenigstens eine Vorrichtung, vorzugsweise werden zwei oder mehr Vorrichtungen, zur Erzeugung von elektromagnetischer Strahlung der oben angegebenen Frequenz(en) verwendet. Beispielsweise können in Schritt b) und/oder Schritt c) eine oder mehrere Vorrichtungen zur Erzeugung von elektromagnetischer Strahlung der oben angegebenen Frequenz(en) verwendet werden, die jeweils unabhängig voneinander den wenigstens einen Formkörpergrünling mit unterschiedlichen oder gleichen Frequenzen beaufschlagen.

Eine geeignete Vorrichtung zur Erzeugung von elektromagnetischer Strahlung der oben angegebenen Frequenzen ist bevorzugt eine Laufzeitröhre, insbesondere eine Kreuzfeldröhre oder eine Linearstrahlröhre. Weiter bevorzugt ist die Vorrichtung zur Erzeugung der elektromagnetischer Strahlung mit der oben angegebenen Frequenzen ein Magnetron oder eine Wanderfeldröhre. Besonders bevorzugt ist die Vorrichtung zur Erzeugung von elektromagnetischer Strahlung ein Magnetron. Insbesondere umfasst die Vorrichtung zur Erzeugung der elektromagnetischer Strahlung zumindest einen Hohlleiter.

Beispielsweise sind die ein oder mehreren Vorrichtungen zur Erzeugung von elektromagnetischer Strahlung derart angeordnet, dass die Vorrichtungen zur Erzeugung von elektromagnetischer Strahlung jeweils der gleichen Oberfläche und/oder jeweils unterschiedlichen Oberflächen des wenigstens einen Formkörpergrünlings zugewandt sind.

Es ist möglich, dass die ein oder mehreren Vorrichtungen zur Erzeugung von elektromagnetischer Strahlung während Schritt c), während Schritt b) oder während Schritt c) und Schritt b) aktiviert und/oder deaktiviert werden. Insbesondere erfolgt die Beaufschlagung mit elektromagnetischer Strahlung des wenigstens einen Formkörpergrünlings und/oder Formkörpers gepulst. Hierdurch wird eine verbesserte Kontrolle der Leistungsdichte der elektromagnetischen Strahlung, mit der der wenigstens eine Formkörpergrünling und/oder Formkörper beaufschlagt wird, ermöglicht.

Weiter bevorzugt können zwei oder mehr Vorrichtungen zur Erzeugung von elektromagnetischer Strahlung während Schritt c), während Schritt b) oder während Schritt c) und Schritt b) jeweils unabhängig voneinander aktiviert und/oder deaktiviert werden. Es ist auch möglich, dass zwei oder mehr Vorrichtungen zur Erzeugung von elektromagnetischer Strahlung jeweils die gleiche und/oder unterschiedliche Frequenz(en) und/oder Leistung(en) emittieren.

Beispielsweise können zwei oder mehr Vorrichtungen zur Erzeugung von elektromagnetischer Strahlung verwendet werden, die derart angeordnet und/oder gesteuert sein können, dass der wenigstens eine Formkörpergrünling der elektromagnetischen Strahlung zeitgleich oder nacheinander ausgesetzt wird, wobei vorzugsweise jeweils die gleiche und/oder unterschiedliche Frequenz(en) und/oder Leistungsdichte(n) emittiert werden.

Insbesondere im Hinblick auf eine gleichbleibende Qualität der erhaltenen Produkte ist eine zumindest teilweise homogene Verteilung der verwendeten elektromagnetischen Strahlung mit einer Frequenz von 300 MHz bis 300 GHz in Schritt c), in Schritt b) oder in Schritt c) und Schritt b), insbesondere in der Vorrichtung und/oder in dem wenigstens einen Formkörpergrünling, bevorzugt.

Daher ist es möglich, dass Schritt c), Schritt b), oder Schritt c) und Schritt b) in einer Vorrichtung durchgeführt wird, die vorzugsweise wenigstens einen Reflektor aufweist, der elektromagnetische Strahlung mit einer Frequenz von 300 MHz bis 300 GHz reflektiert, insbesondere auf den wenigstens einen Formkörpergrünling reflektiert.

Vorzugsweise wird Schritt c), Schritt b), oder Schritt c) und Schritt b) in einer Vorrichtung durchgeführt, die vorzugsweise wenigstens einen rotierenden und/oder oszillierenden Reflektor, beispielsweise in Form wenigstens eines Reflektorflügels, und/oder wenigstens eine rotierend und/oder oszillierend angebrachte und/oder wenigstens eine rotierende und/oder oszillierende Vorrichtung zur Erzeugung elektromagnetischer Strahlung mit einer Frequenz von 300 MHz bis 300 GHz aufweist.

Alternativ oder zusätzlich kann der wenigstens eine Formkörpergrünling bewegt, insbesondere entlang einer Linie oder einer Kreisbahn, und/oder gedreht werden, um ein gleichmäßiges Beaufschlagen mit der elektromagnetischen Strahlung zu ermöglichen.

Bei einer bevorzugten Ausführungsform der Erfindung wird in Schritt c), in Schritt b), oder in Schritt c) und Schritt b) wenigstens ein Ventilator verwendet.

Die gleichmäßigere Erwärmung des wenigstens einen Formkörpergrünlings wird durch die homogenere Verteilung der elektromagnetischen Strahlung mit einer Frequenz von 300 MHz bis 300 GHz, insbesondere in der Vorrichtung und/oder in dem wenigstens einen Formkörpergrünling, gefördert.

Das optionale Trocknen und/oder das Brennen kann durch den wenigstens einen Ventilator, durch ein zumindest teilweises Austauschen von einer insbesondere oberflächennahen mit Dampf, vorzugsweise Wasserdampf, angereicherten Gas, bevorzugt Luft und/oder Luftgemisch, mit weniger angereichertem Gas vorzugsweise gefördert und/oder gesteuert werden.

Der wenigstens eine Ventilator und der wenigstens eine Reflektor, vorzugsweise Reflektorflügel, können derart gestaltet sein, dass sie jeweils die Funktion eines Ventilators und eines Reflektorflügels erfüllen.

Es ist möglich, dass eine Vorrichtung, mit der das Verfahren durchgeführt wird, eine Auskleidung aufweist, die bei den in den Verfahrensschritten, insbesondere in Schritt c), auftretenden Temperaturen bis zu einer Temperatur von wenigstens 1600 °C formbeständig ist.

Es ist möglich, dass eine Vorrichtung, in der das Verfahren durchgeführt wird, wenigstens eine dem wenigstens einen Formkörpergrünling zugewandte Auskleidung aufweist. Die Auskleidung kann mindestens einen Mikrowellen-Suszeptor umfassen. Die Auskleidung kann hierbei mit dem wenigstens einen Mikrowellen-Suszeptor beschichtet sein, vorzugsweise auf zumindest Teilbereichen einer dem wenigstens einen Formkörpergrünling zugewandten Oberfläche der Auskleidung. Beispielsweise kann eine derart ausgestaltete Auskleidung durch eine Trockenbeschichtung mit mindestens einem Mikrowellen-Suszeptor und/oder durch Beschichtung mit einer mindestens einen Mikrowellen-Suszeptor enthaltenden Glasur nach aus dem Stand der Technik bekannten Beschichtungsverfahren bereitgestellt werden.

Alternativ oder zusätzlich kann zumindest ein Teilbereich der wenigstens einen Auskleidung selbst als Mikrowellen-Suszeptor wirken. Der Vorteil hierbei ist, dass eine entsprechend ausgestaltete Auskleidung mit der in dem Verfahren eingesetzten elektromagnetischen Strahlung mit einer Frequenz von 300 MHz bis 300 GHz wechselwirken kann. Damit kann, wie vorstehend beschrieben, Wärme abgestrahlt und das optionale Trocknen, das Brennen und/oder das Trocknen und Brennen beschleunigt werden.

Bei einer weiteren bevorzugten Ausführungsform der Erfindung weist eine Vorrichtung, in der das Verfahren, insbesondere Schritt c), Schritt b) oder Schritt c) und Schritt b), durchgeführt wird, wenigstens eine Auskleidung auf, die wenigstens ein reflektierendes Element umfasst, das elektromagnetische Strahlen mit einer Frequenz von 300 MHz bis 300 GHz, bevorzugt von 600 MHz bis 6000 MHz, weiter bevorzugt von 700 MHz bis 4300 MHz, noch weiter bevorzugt von 730 MHz bis 4000 MHz, ferner noch weiter bevorzugt von 850 MHz bis 3000 MHz, zumindest in einem Teilbereich reflektieren kann. Vorzugsweise umfasst das wenigstens eine reflektierendes Element in dem wenigstens einen Teilbereich wenigstens eine reflektierende Oberfläche, die weiter bevorzugt wenigstens ein Metall, eine Legierung oder eine Mischung davon umfasst oder daraus besteht. Die wenigstens eine reflektierende Oberfläche ist vorzugsweise zumindest auf einer dem wenigstens einen Formkörpergrünling zugewandten Oberfläche der wenigstens einen Auskleidung angeordnet.

Die wenigstens eine reflektierende Oberfläche kann spiegelnd und/oder poliert ausgebildet sein. Es ist möglich, dass die wenigstens eine reflektierende Oberfläche in Form einer Beschichtung und/oder eines Reflexionskörpers ausgebildet ist.

Das reflektierende Element kann eine beliebige geometrische Form aufweisen. Weiter bevorzugt kann das reflektierende Element in Form eines Polyeders, einer Kugel, eines Kugelsegments, eines Kegels, eines Zylinders, eines Kegelstumpfs, eines unregelmäßig gestalteten Körpers oder Kombinationen davon, ausgebildet sein. Ein geeigneter Polyeder kann vorzugsweise in Form eines Quaders, Pyramide, Prismas, Prismatoids, unregelmäßig gestalteten Körpers oder einer Kombination davon, ausgebildet sein.

Das wenigstens eine reflektierende Element kann so angeordnet sein, dass die eingestrahlte elektromagnetische Strahlung in Richtung des wenigstens einen Formkörpergrünlings und/oder wenigstens einen Trägerelements und/oder wenigstens einer Auskleidung zumindest teilweise reflektiert wird.

Die von dem reflektierenden Element reflektierte elektromagnetische Strahlung mit einer Frequenz von 300 MHz bis 300 GHz kann weiter beispielsweise durch den wenigstens einen Formkörpergrünling selbst, durch wenigstens ein Mikrowellen-suszeptorhaltiges Trägerelement und/oder durch wenigstens eine Mikrowellen-suszeptorhaltige Auskleidung absorbiert werden und somit beim optionalen Trocknen und/oder Brennen des wenigstens einen Formkörpergrünlings genutzt werden.

Die Erfindung wird im Folgenden anhand von Figuren und Ausführungsbeispielen erläutert, ohne hierauf beschränkt zu sein.

Fig. 1a bis 1d    zeigt schematische Darstellungen des erfindungsgemäßen Verfahrens.

Fig. 2    zeigt ein schematisches Temperaturprofil und eines schematischen Verlaufs der mittleren Leistungsdichte bezogen auf die Trockenmasse des Formkörpergrünlings.

Fig. 3    zeigt ein weiteres schematisches Temperaturprofil.

Die nachstehend beschriebenen Beispiele und Figuren sollen die vorliegende Erfindung näher erläutern, jedoch in keiner Weise beschränken.

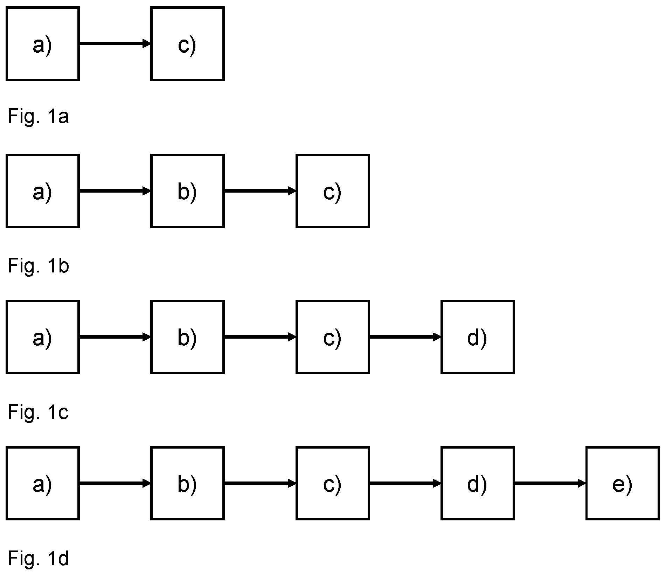

Die Reihenfolge der Verfahrensschritte des erfindungsgemäßen Verfahrens ist schematisch in Fig. 1a bis 1d dargestellt, wobei das erfindungsgemäße Verfahren zumindest die folgenden Verfahrensschritte umfasst:

a) Bereitstellen wenigstens eines Formkörpergrünlings,

b) optional Trocknen des wenigstens einen Formkörpergrünlings unter Erhalt wenigstens eines zumindest teilweise getrockneten Formkörpergrünlings, und

c) Brennen des, optional in Schritt b) erhaltenen zumindest teilweise getrockneten, Formkörpergrünlings unter Erhalt wenigstens eines gebrannten grobkeramischen Formkörpers.

Es ist weiter möglich, dass das Verfahren zumindest einen Schritt d) des Kühlen des Formkörpergrünlings und/oder gebrannten grobkeramischen Formkörpers oder zumindest einen Schritt e) der Oberflächenbeschichtung aufweist (siehe beispielhaft Fig. 1c oder Fig. 1d). Es ist aber auch möglich, dass - im Gegensatz zu dem in den Fig. 1a bis 1d gezeigten Verfahrensablauf - Schritte mehrmals durchgeführt werden, oder weitere Schritte vom Verfahren umfasst werden.

Um den vorstehend genannten Einfluss des Herstellungsverfahrens zu zeigen, wurden, analog zu Schritt a) des erfindungsgemäßen Verfahrens, aus mehreren Formmassen Formkörpergrünlinge bereitgestellt, wobei aus jeder Formmasse zwei Formkörpergrünlinge bereitgestellt wurden.

Anschließend wurden jeweils die zwei Formkörpergrünlinge zur Durchführung von weiteren Verfahrensschritten zwei unterschiedlichen Verfahren zugeführt.

Das erste Verfahren entsprach einem Verfahren mittels Beaufschlagung mit elektromagnetischer Strahlung mit einer Frequenz von 300 MHz bis 300 GHz.

Das zweite Verfahren entsprach einem konventionellen Verfahren mittels Beaufschlagen mit thermischer Strahlung in einem Tunnelofen, welcher durch Verbrennung von Erdgas betrieben wurde.

Ein bereitgestellter Formkörpergrünling jeder Formmasse wurde dem ersten Verfahren und ein weiterer bereitgestellter Formkörpergrünling jeder Formmasse dem zweiten Verfahren zugeführt.

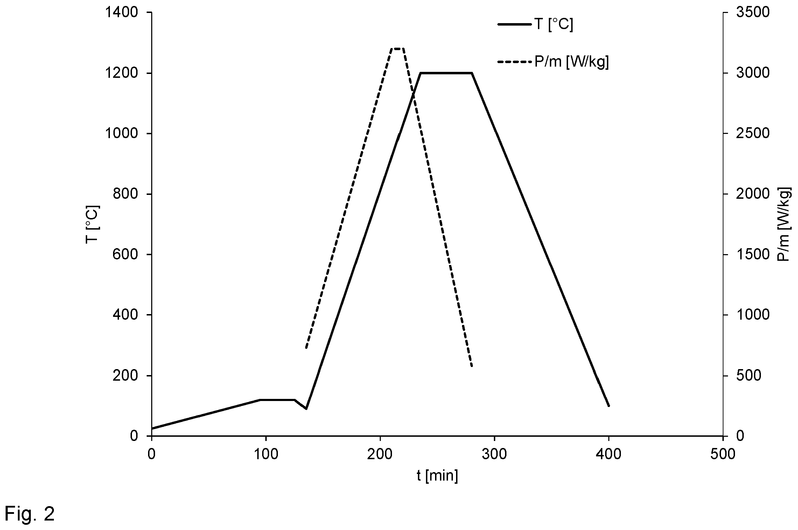

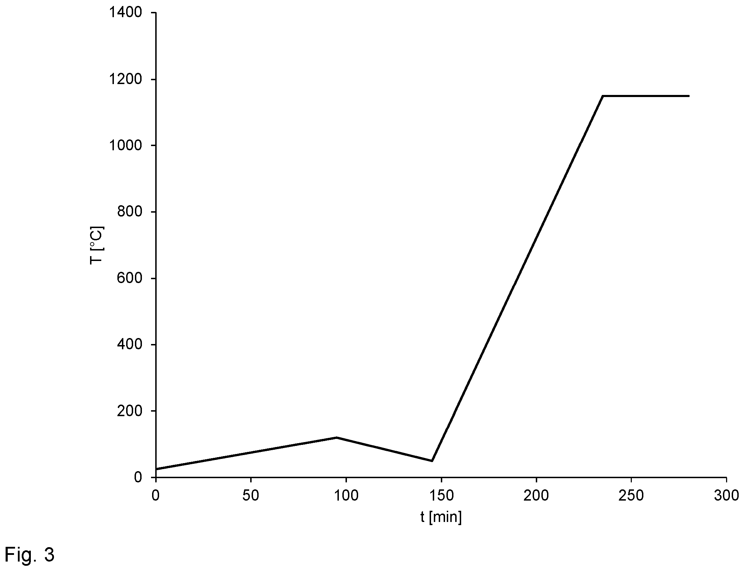

Die jeweilige Oberflächentemperatur der Formkörpergrünlinge bzw. des gebrannten grobkeramischen Formkörpers sind in Abhängigkeit der Prozesszeit des erfindungsgemäßen Verfahrens in Fig. 2 bzw. 3 gezeigt (durchgehende Linie). Der Zeitraum, in dem der Formkörpergrünling auf Raumtemperatur, abkühlt ist in Fig. 3 der Übersichtlichkeit halber nicht dargestellt, da er nicht aktiv gesteuert wurde. Weiter ist in Fig. 2 exemplarisch die Variation der mittleren Leistungsdichte während des Brennens, also in Schritt c), von Beispiel 1 gezeigt (gestrichelte Linie). Der jeweilig gezeigte Temperaturverlauf oder Leistungsdichtenverlauf ist schematisch zu verstehen, in dem angestrebte Eckwerte linear verbunden sind. Es ist auch möglich, dass die Änderung der Oberflächentemperatur des Formkörpergrünlings im Wesentlichen einer Wurzelfunktion, Exponentialfunktion, Potenzfunktion, Logarithmusfunktion oder Kombinationen davon folgt.

**Beispiel 1**

**Herstellung Formmasse und Formkörpergrünling**

Eine erste Formmasse aus der Formkörpergrünlinge bereitgestellt wurden, wies die folgende Zusammensetzung, jeweils bezogen auf das Trockengewicht eines daraus erhaltenen Formkörpergrünlings, auf:

| | |
|---|---|
| Ungebrannter Lehm: | 74,8 Gew.-%, |
| Ungebrannter Ton: | 22,5 Gew.-%, |
| Zuschläge: | 2,7 Gew.-%. |

Die Zuschläge umfassten Bariumcarbonat, Trockenbruch und Sand. Die erste Formmasse wies einen Aluminiumoxid-Gehalt von 13,9 Gew.-%, jeweils bezogen auf das Trockengewicht des daraus bereitgestellten Formkörpergrünlings, auf.

Hierzu wurden 749.400 kg Lehm zunächst in einem Kollergang (Fa. Rieter GmbH, Konstanz, Modell: K20/80-MS) vorzerkleinert. Anschließend erfolgte eine Zerkleinerung des Lehms durch Walzen mit verstellbaren Walzenspalten auf eine Partikelgröße von kleiner oder gleich 0,5 mm. 212.700 kg Ton wurde mit Walzen (Fa. Rieter GmbH, Konstanz, Modell: HW 80x120 HM/G) mit verstellbaren Walzenspalt auf eine Partikelgröße von kleiner oder gleich 0,6 mm zerkleinert. Zusätzlich wurde zur Vermeidung von Ausblühungen dem Ton als Zuschlag 370 kg Bariumcarbonat zugegeben. Danach erfolgte ein Vermischen des Lehms, des Tons und der restlichen Zuschläge in einem Doppelwellenmischer (Fa. Händle GmbH, Mühlacker, Modell: MDMG 1035C) um die Formmasse herzustellen. Die Formmasse wurde bei 90 % rel. Luftfeuchte mit ca. 19 Gew.-% Feuchtegehalt, bezogen auf das jeweilige Trockengewicht des Formkörpergrünlings, eingelagert, um eine gleichmäßigere Durchfeuchtung zu erreichen. Nach der Lagerung für ca. 4 Wochen wurde die Formmasse einer Dachziegel-Revolverpresse zugeführt, die mittels Gipsformen die Formkörpergrünlinge formte.

Es wurden Formkörpergrünlinge erhalten, die wie in Schritt a) beschrieben bereitgestellt wurden. Diese Formkörpergrünlinge wiesen jeweils ein Trockengewicht von 3425 g, ein Feststoffvolumen von 1696 cm$^3$ und einen Feuchtegehalt von jeweils ca. 19 Gew.-% auf, bezogen auf das jeweilige Trockengewicht des Formkörpergrünlings. Die Formkörpergrünlinge wurden in Form von Dachziegeln (Modell: E58-S, Fa. Erlus AG, Neufahrn/Nb.) bereitgestellt. Alternativ ist es möglich, Formkörpergrünlinge auch in Form einer Fassadenplatte, eines Klinkersteins oder eines Ziegelsteins oder bereitzustellen.

Die Dicke eines Formkörpergrünlings war ausgewählt aus einem Bereich von 9 mm bis 35 mm, jeweils bei senkrechter Betrachtung von oben auf die von dem Formkörpergrünling aufgespannte Frontalebene. Bei senkrechter Betrachtung von oben auf die von einem Formkörpergrünling aufgespannte Frontalebene, wies die laterale Ausdehnung des Formkörpergrünlings Abmessungen jeweils von 28,5 cm x 45,5 cm auf.

**Erfindungsgemäßes Beispiel 1**

Anschließend wurde der Formkörpergrünling Schritt b) zugeführt und zumindest teilweise getrocknet. Hierzu wurde der Formkörpergrünling in einer Mikrowellenkammer (Fa. Fricke und Mallah Microwave Technology GmbH, Peine) angeordnet, welche ein Kammervolumen von 1,7 m$^3$ und vier einzeln ansteuerbaren Magnetrons mit jeweils einer maximalen Mikrowellenleistung von 6 kW aufwies.

Anschließend wurde der Formkörpergrünling bei Mikrowellenleistung von 1300 W und einer Frequenz von 2450 MHz zumindest teilweise getrocknet. Dies entsprach einer mittleren Leistungsdichte von ca. 380 W/kg, jeweils bezogen auf das Trockengewicht des Formkörpergrünlings zu Beginn von Schritt b). Hierzu wurde der Formkörpergrünling während einer Aufwärmphase, ausgehend von Raumtemperatur von 25 °C mit einer mittleren Temperaturänderungsrate $\frac{\Delta T_{b)}}{\Delta t_{b)}}$ von 1 K/min und einem linearen Temperaturprofil auf eine Oberflächentemperatur von 120 °C erwärmt. Anschließend wurde der Formkörpergrünling bei dieser Temperatur für weitere 30 min zumindest teilweise getrocknet, bis der Formkörpergrünling einen Feuchtegehalt von jeweils ca. 0,5 Gew.-%, bezogen auf das Trockengewicht des Formkörpergrünlings, aufwies.

Danach wurde der Formkörpergrünling mit Hochtemperatur-Keramikfaser-Platten vollständig umhüllt. Die Abmessungen der Hochtemperatur-Keramikfaser-Umhüllung aus Aluminiumoxid betrugen in der Länge 50 cm, in der Breite 33 cm und in der Höhe 20 cm. Hierbei kühlte der Formkörpergrünling auf 90 °C ab.

Anschließend wurde der Formkörpergrünling bei einer Mikrowellenleistung zwischen 2500 W bis 11000 W und einer Frequenz von 2450 MHz gebrannt. Dies entsprach somit Schritt c). Hierzu wurde der Formkörpergrünling während einer Aufwärmphase ausgehend von einer Oberflächentemperatur von 90 °C mit einer mittleren Temperaturänderungsrate $\frac{\Delta T_{c)}}{\Delta t_{c)}}$ von 11 K/min und einem linearen Temperaturprofil innerhalb von 100 min auf eine Oberflächentemperatur von 1200 °C erwärmt und anschließend bei dieser Temperatur für weitere 45 min zumindest teilweise gebrannt. Die Mikrowellenleistung wurde so gesteuert, dass die eingestellte mittlere Temperaturänderungsrate $\frac{\Delta T_{c)}}{\Delta t_{c)}}$ entlang des linearen Temperaturprofils und das Temperaturplateau bei einer Oberflächentemperatur von 1200 °C erreicht wurde. Die Mikrowellenleistung zu Beginn von Schritt c) entsprach einer mittleren Leistungsdichte von ca. 730 W/kg und wurde innerhalb von 75 min auf ca. 3200 W/kg erhöht, für 10 min im Wesentlichen konstant gehalten, und dann bis zum Ende von Schritt c) auf ca. 580 W/kg verringert, jeweils bezogen auf das Trockengewicht des Formkörpergrünlings. Erhalten wurde ein gebrannter grobkeramischer Formkörper in Form eines Dachziegels.

Im Anschluss wurde der Mikrowellenofen deaktiviert und der gebrannte grobkeramische Formkörper zur Abkühlung in Schritt d) für 2 h von 1200 °C auf 100 °C in der Mikrowellenkammer gekühlt, in dem Umgebungsluft auf den Formkörper geblasen wurde.

**Vergleichsbeispiel 1**

Zur Durchführung des konventionellen Verfahrens in einem Tunnelofen wurde ein weiterer Formkörpergrünling erst für 44 h in einem Kammertrockner (Fa. Novokeram GmbH, Krumbach) auf einer Metall-Kassette getrocknet. Anschließend wurde der getrocknete Formkörpergrünling in einem Tunnelofen in einer H-Kassette angeordnet und liegend auf einem Ofenwagen mit einer Durchlaufzeit von 19 h von Ofeneinfahrt bis Ofenausfahrt gebrannt. Die Verweildauer im Hochtemperaturbereich, also bei Temperaturen von wenigstens 1000 °C, betrug ca. 4,5 h. In Summe wies das konventionelle Verfahren eine Prozesszeit des Trocknens und des Brennens von 63 h auf. Erhalten wurde ein Formkörper der im Folgenden als konventionell gebrannter grobkeramischer Formkörper bezeichnet wird.

**Beispiel 2**

**Herstellung Formmasse und Formkörpergrünling**

Eine zweite Formmasse aus der Formkörpergrünlinge bereitgestellt wurden, wies die folgende Zusammensetzung, jeweils bezogen auf das Trockengewicht eines daraus erhaltenen Formkörpergrünlings, auf:

| | |
|---|---|
| Ungebrannter Lehm: | 70 Gew.-%, |
| Ungebrannter Ton: | 24,5 Gew.-%, |
| Zuschläge: | 5,5 Gew.-%. |

Die Zuschläge umfassten Sand, Bariumcarbonat und Manganoxid. Die zweite Formmasse wies einen Aluminiumoxid-Gehalt von 15,6 Gew.-%, jeweils bezogen auf das Trockengewicht des daraus bereitgestellten Formkörpergrünlings, auf.

Die Formkörpergrünlinge wurden aus der zweiten Formmasse bereitgestellt. Dies erfolgte analog wie bereits hinsichtlich der ersten Formmasse beschrieben, bis auf den Unterschied, dass die Zerkleinerung der Materialien als Trockenmahlung in einer Fliehkraftpendelmühle (Fa. Neumann & Esser, Übach-Palenberg, Modell PM16U3) erfolgte.

Es wurden Formkörpergrünlinge erhalten, die wie in Schritt a) beschrieben bereitgestellt wurden. Diese Formkörpergrünlinge wiesen jeweils ein Trockengewicht von 4390 g, ein Feststoffvolumen von 2173 cm$^3$ und einen Feuchtegehalt von jeweils ca. 18 Gew.-% auf, bezogen auf das jeweilige Trockengewicht des Formkörpergrünlings. Die Formkörpergrünlinge wurden in Form von Dachziegeln (Modell: E58 SL-D, Fa. Erlus AG, Neufahrn/Nb) bereitgestellt.

Die Dicke eines Formkörpergrünlings war ausgewählt aus einem Bereich von 9 mm bis 35 mm, jeweils bei senkrechter Betrachtung von oben auf die von dem Formkörpergrünling aufgespannte Frontalebene. Bei senkrechter Betrachtung von oben auf die von einem Formkörpergrünling aufgespannte Frontalebene, wies die laterale Ausdehnung des Formkörpergrünlings Abmessungen jeweils von 32 cm x 50 cm auf.

**Erfindungsgemäßes Beispiel 2**

Anschließend wurde der Formkörpergrünling Schritt b) zugeführt und zumindest teilweise getrocknet. Hierzu wurde der Formkörpergrünling in einer Mikrowellenkammer (Fa. Fricke und Mallah Microwave Technology GmbH, Peine) angeordnet, welche ein Kammervolumen von 1,7 m$^3$ und vier einzeln ansteuerbaren Magnetrons mit jeweils einer maximalen Mikrowellenleistung von 6 kW aufwies.

Anschließend wurde der Formkörpergrünling bei einer Mikrowellenleistung von 1600 W und einer Frequenz von 2450 MHz zumindest teilweise getrocknet. Dies entsprach einer mittleren Leistung von ca. 365 W/kg, jeweils bezogen auf das Trockengewicht des Formkörpergrünlings zu Beginn von Schritt b). Hierzu wurde der Formkörpergrünling während einer Aufwärmphase ausgehend von Raumtemperatur von 25 °C mit einer mittleren Temperaturänderungsrate $\frac{\Delta T_{b)}}{\Delta t_{b)}}$ von 1 K/min und einer linearen Temperaturänderung auf eine Oberflächentemperatur von 120 °C erwärmt und zumindest teilweise getrocknet. Der Formkörpergrünling wies nach dem Schritt b) einen Feuchtegehalt von ca. 0,5 Gew.-% auf, bezogen auf das Trockengewicht des Formkörpergrünlings.

Danach wurde der Formkörpergrünling mit Hochtemperatur-Keramikfasern in Form einer Fasermatte vollständig umhüllt. Die Abmessungen der Hochtemperatur-Keramikfaser-Umhüllung aus Aluminiumoxid betrugen in der Länge 50 cm, in der Breite 33 cm und in der Höhe 8 cm. Währenddessen kühlte der Formkörpergrünling auf 50 °C ab.

Anschließend wurde der Formkörpergrünling bei einer Mikrowellenleistung von zwischen 2500 W bis 9000 W und einer Frequenz von 2450 MHz gebrannt. Dies entsprach somit Schritt c). Der Formkörpergrünling wurde während einer Aufwärmphase ausgehend von einer Oberflächentemperatur von 50 °C mit einer mittleren Temperaturänderungsrate $\frac{\Delta T_{c)}}{\Delta t_{c)}}$ von 12,2 K/min und einem linearen Temperaturprofil innerhalb von 90 min auf eine Oberflächentemperatur von 1150 °C erwärmt und anschließend bei dieser Temperatur für weitere 45 min zumindest gebrannt. Die Mikrowellenleistung wurde so gesteuert, dass die eingestellte mittlere Temperaturänderungsrate $\frac{\Delta T_{c)}}{\Delta t_{c)}}$ entlang des linearen Temperaturprofils und das Temperaturplateau bei einer Oberflächentemperatur von 1150 °C erreicht wurde. Hierzu wurde die mittlere Leistungsdichte während zu Beginn von Schritt c) von ca. 570 W/kg bis zu einem Maximum von ca. 2050 W/kg variiert, jeweils bezogen auf das Trockengewicht des Formkörpergrünlings. Erhalten wurde ein gebrannter grobkeramischer Formkörper in Form eines Dachziegels.

Im Anschluss der Mikrowellenofen deaktiviert und der gebrannte grobkeramische Formkörper zusammen mit der Hochtemperatur-Keramikfaser-Umhüllung zur Abkühlung auf Raumtemperatur für 14 h in der Mikrowellenkammer gelassen.

**Vergleichsbeispiel 2**

Das konventionelle Verfahren zum Erhalt eines gebrannten grobkeramischen Formkörpers wurde mit den gleichen Einstellungen und Vorrichtungen durchgeführt wie bereits hinsichtlich des zu Beispiel 1 beschriebenen konventionell gebrannten grobkeramischen Formkörpers durchgeführt. Das konventionelle Verfahren nach Beispiel 2 wies eine Prozesszeit für die Trocknung und des Brennens von 63 h.

**Ergebnis**

Es zeigte sich, dass die gebrannten grobkeramischen Formkörper, die mittels Beaufschlagen von elektromagnetischer Strahlung getrocknet und/oder gebrannt wurden, in einer wesentlich kürzeren Prozesszeit hergestellt werden konnten im Vergleich zu gebrannten grobkeramischen Formkörper, die mit konventionellen Verfahren mittels Strahlungs- und Konvektionswärme aus einer Gas- oder elektrischen Widerstandsheizung, hergestellt wurden.

Weiter konnte bei einer Betrachtung der gebrannten grobkeramischen Formkörper, die durch das erfindungsgemäße Verfahren erhalten wurden, auch trotz des schnellen Aufheizens keine Abplatzungen oder eine im Vergleich zu den konventionell hergestellten Formkörpern erhöhte Rissanzahl festgestellt werden. Weiter konnte kein Hinweis auf weitere schlechtere mechanische oder strukturelle Eigenschaften gefunden werden.

Somit ist durch das erfindungsgemäße Verfahren es möglich gebrannte grobkeramische Formkörper zu erhalten, die eine wesentlich geringere Prozesszeit benötigen, eine reduzierte Menge an fossilen Brennstoffen und daher in Summe einen geringeren $CO_2$-Fussabdruck aufweisen, ohne dass die mechanischen und strukturellen Eigenschaften verschlechtert werden.

**Patentansprüche**

1. Verfahren zur Herstellung eines gebrannten grobkeramischen Formkörpers, wobei das Verfahren folgende Schritte, vorzugsweise in folgender Reihenfolge, umfasst:

   a) Bereitstellen wenigstens eines Formkörpergrünlings,
   b) optional Trocknen des wenigstens einen Formkörpergrünlings unter Erhalt wenigstens eines zumindest teilweise getrockneten Formkörpergrünlings, und
   c) Brennen des, optional in Schritt b) erhaltenen zumindest teilweise getrockneten, Formkörpergrünlings unter Erhalt wenigstens eines gebrannten grobkeramischen Formkörpers,

   **dadurch gekennzeichnet,**

   **dass** das Brennen des wenigstens einen Formkörpergrünlings in Schritt c) unter Beaufschlagen des wenigstens einen Formkörpergrünlings mit elektromagnetischer Strahlung mit einer Frequenz von 300 MHz bis 300 GHz durchgeführt wird,
   wobei der wenigstens eine Formkörpergrünling in Schritt c) in zumindest einer Aufwärmphase mit einer mittleren Temperaturänderungsrate $\frac{\Delta T_{c)}}{\Delta t_{c)}}$ von wenigstens 5 K/min erwärmt wird,
   wobei zu Beginn des Schritts c) der wenigstens eine Formkörpergrünling einen Feuchtegehalt von maximal 1 Gew.-%, bezogen auf das Trockengewicht des wenigstens einen zu Beginn von Schritt c) vorliegenden Formkörpergrünlings, aufweist.

2. Verfahren nach Anspruch 1,
   **dadurch gekennzeichnet,**
   **dass** die zumindest eine Aufwärmphase in Schritt c) über einen Zeitraum von maximal 300 min, bevorzugt von maximal 160 min, durchgeführt wird.

3. Verfahren nach einem der vorstehenden Ansprüche,
   **dadurch gekennzeichnet,**
   **dass** in Schritt a) der wenigstens eine bereitgestellte Formkörpergrünling einen Aluminiumoxid-Gehalt von maximal 25 Gew.-%, bevorzugt von maximal 19 Gew.-%, jeweils bezogen auf das Trockengewicht des wenigstens einen Formkörpergrünlings, aufweist.

4. Verfahren nach einem der vorstehenden Ansprüche,
   **dadurch gekennzeichnet,**
   **dass** in Schritt a) der wenigstens eine bereitgestellte Formkörpergrünling ungebrannten Ton und/oder ungebrannten Lehm sowie optional Zuschläge umfasst oder daraus besteht.

5. Verfahren nach einem der vorstehenden Ansprüche,
   **dadurch gekennzeichnet,**
   **dass** zu Beginn des Schritts c) der wenigstens eine Formkörpergrünling einen Feuchtegehalt von maximal 0,5 Gew.-%, bezogen auf das Trockengewicht des wenigstens einen zu Beginn von Schritt c) vorliegenden Formkörpergrünlings, aufweist.

6. Verfahren nach einem der vorstehenden Ansprüche,
   **dadurch gekennzeichnet,**
   **dass** Schritt c) zumindest ein Temperaturplateau aufweist, wobei der wenigstens eine Formkörpergrünling und/oder gebrannte grobkeramische Formkörper während des zumindest einen Temperaturplateaus in Schritt c) auf einer Oberflächentemperatur ausgewählt aus einem Bereich von 800 °C bis 1600 °C, bevorzugt von 900 °C bis 1400 °C, gehalten wird.

7. Verfahren nach Anspruch 6,
   **dadurch gekennzeichnet,**
   **dass** das zumindest eine Temperaturplateau in Schritt c) über einen Zeitraum, vorzugsweise von maximal 100 min, bevorzugt von maximal 75 min, gehalten wird.

8. Verfahren nach einem der vorstehenden Ansprüche,
   **dadurch gekennzeichnet,**
   **dass** der wenigstens eine Formkörpergrünling in Schritt c) mit elektromagnetischer Strahlung mit einer mittleren Leistungsdichte von wenigstens 600 W/kg, bevorzugt von wenigstens 700 W/kg, beaufschlagt wird, jeweils bezogen auf das Trockengewicht des wenigstens einen zu Beginn von Schritt c) vorliegenden Formkörpergrünlings.

9. Verfahren nach einem der vorstehenden Ansprüche,
   **dadurch gekennzeichnet,**
   **dass** das Verfahren einen Schritt d) des Kühlens aufweist:
   d) Kühlen des wenigstens einen Formkörpergrünlings und/oder des gebrannten grobkeramischen Formkörpers, wobei das Kühlen durch Einblasen von Gas erfolgt unter Erhalt von erwärmten Gas.

10. Verfahren nach Anspruch 9,
    **dadurch gekennzeichnet,**
    **dass** Schritt d) über einen Zeitraum, vorzugsweise von maximal 300 min, bevorzugt maximal 180 min, durchgeführt wird.

11. Verfahren nach einem der Ansprüche 9 oder 10,
    **dadurch gekennzeichnet,**
    **dass** in Schritt d) der wenigstens eine Formkörpergrünling und/oder der gebrannte grobkeramische Formkörper mit einer mittleren Temperaturänderungsrate $\frac{\Delta T_{d)}}{\Delta t_{d)}}$ in zumindest einer Abkühlphase von wenigstens -5 K/min, bevorzugt wenigstens -8,3 K/min, weiter bevorzugt von wenigstens -11,1 K/min, gekühlt wird.

12. Verfahren nach einem der Ansprüche 9 bis 11,
    **dadurch gekennzeichnet,**
    **dass** das in Schritt d) erhaltene erwärmte Gas verwendet wird, um einen weiteren Formkörpergrünling zu erwärmen, bevorzugt zumindest teilweise zu trocknen.

13. Verfahren nach einem der vorstehenden Ansprüche,
    **dadurch gekennzeichnet,**
    **dass** das Verfahren über einen Zeitraum von maximal 700 min, bevorzugt maximal 415 min, durchgeführt wird.

14. Verfahren nach einem der vorstehenden Ansprüche,
    **dadurch gekennzeichnet,**
    **dass** das Verfahren wenigstens einen Schritt e) der Oberflächenbeschichtung aufweist, wobei Schritt e) nach Schritt a) und/oder nach dem optionalen Schritt b) und/oder nach Schritt c) durchgeführt wird:
    e) Aufbringen wenigstens einer Oberflächenbeschichtung, vorzugsweise einer luftreinigenden Oberflächenbeschichtung und/oder einer selbstreinigenden Oberflächenbeschichtung, auf wenigstens einem Teilbereich wenigstens einer Oberfläche des wenigstens einen Formkörpergrünlings und/oder des wenigstens einen zumindest teilweise getrockneten Formkörpergrünlings und/oder des wenigstens einen gebrannten grobkeramischen Formkörpers.

15. Verfahren nach einem der vorstehenden Ansprüche,
    **dadurch gekennzeichnet,**
    **dass** in Schritt c) der wenigstens eine gebrannte grobkeramische Formkörper in Form eines Dachziegels, einer Fassadenplatte, eines Klinkerstein oder eines Ziegelsteins erhalten wird.

**Claims**

1. Process for producing a fired coarse-ceramic moulding, wherein the process comprises steps as follows, preferably in order as follows:

    a) providing at least one green moulding;
    b) optionally drying the at least one green moulding to give at least one at least partially dried green moulding, and
    c) firing the at least partially dried green moulding obtained optionally in step b), to give at least one fired coarse-ceramic moulding,

    **characterized**

    **in that** the firing of the at least one green moulding in step c) is carried out while subjecting the at least one green moulding to electromagnetic radiation with a frequency of 300 MHz to 300 GHz,
    wherein the at least one green moulding in step c) is heated in at least one heat-up phase with an average temperature change rate $\frac{\Delta T_{c)}}{\Delta t_{c)}}$ of at least 5 K/min,
    wherein at the start of step c) the at least one green moulding has a moisture content of not more than 1% by weight, based on the dry weight of the at least one green moulding present at the start of step c).

2. Process according to Claim 1,
   **characterized**
   **in that** the at least one heat-up phase in step c) is carried out over a period of not more than 300 min, preferably of not more than 160 min.

3. Process according to either of the preceding claims,
   **characterized**
   **in that** in step a) the at least one green moulding provided has an aluminium oxide content of not more than 25% by weight, preferably of not more than 19% by weight, based in each case on the dry weight of the at least one green moulding.

4. Process according to any of the preceding claims, **characterized**
   **in that** in step a) the at least one green moulding provided comprises or consists of unfired clay and/or unfired loam and optionally aggregates.

5. Process according to any of the preceding claims, **characterized**
   **in that** at the start of step c), the at least one green moulding has a moisture content of not more than 0.5% by weight, based on the dry weight of the at least one green moulding present at the start of step c).

6. Process according to any of the preceding claims, **characterized**
   **in that** step c) has at least one temperature plateau, wherein the at least one green moulding and/or fired coarse-ceramic moulding is held during the at least one temperature plateau in step c) at a surface temperature selected from a range from 800°C to 1600°C, preferably from 900°C to 1400°C.

7. Process according to Claim 6,
   **characterized**
   **in that** the at least one temperature plateau in step c) is held over a period, preferably of not more than 100 min, preferably of not more than 75 min.

8. Process according to any of the preceding claims, **characterized**
   **in that** the at least one green moulding in step c) is subjected to electromagnetic radiation with an average power density of at least 600 W/kg, preferably of at least 700 W/kg, based in each case on the dry weight of the at least one green moulding present at the start of step c).

9. Process according to any of the preceding claims, **characterized**
   **in that** the process has a step d) of cooling:
   d) cooling the at least one green moulding and/or the fired coarse-ceramic moulding, wherein the cooling takes place by blowing in gas to give heated gas.

10. Process according to Claim 9,
    **characterized**
    **in that** step d) is carried out over a period, preferably of not more than 300 min, preferably of not more than 180 min.

11. Process according to either of Claims 9 and 10, **characterized**
    **in that** in step d) the at least one green moulding and/or the fired coarse-ceramic moulding is cooled with an average temperature change rate $\frac{\Delta T_{d)}}{\Delta t_{d)}}$ in at least one cool-down phase of at least -5 K/min, preferably at least -8.3 K/min, more preferably of at least -11.1 K/min.

12. Process according to any of Claims 9 to 11,
    **characterized**
    **in that** the heated gas obtained in step d) is used to heat, preferably at least partially to dry, a further green moulding.

13. Process according to any of the preceding claims, **characterized**
    **in that** the process is carried out over a period of not more than 700 min, preferably not more than 415 min.

14. Process according to any of the preceding claims, **characterized**
    **in that** the process comprises at least one step e) of surface coating, wherein step e) is carried out after step a) and/or after the optional step b) and/or after step c):
    e) applying at least one surface coating, preferably an air-purifying surface coating and/or a self-cleaning surface coating, to at least one subregion of at least one surface of the at least one green moulding and/or of the at least one at least partially dried green moulding and/or of the at least one fired coarse-ceramic moulding.

15. Process according to any of the preceding claims, **characterized**
    **in that** in step c) the at least one fired coarse-ceramic moulding is obtained in the form of a roof tile, a facade panel, a clinker block or a brick.

**Revendications**

1. Procédé de fabrication d'un corps moulé en céramique grossière cuit, le procédé comprenant les étapes suivantes, de préférence dans l'ordre suivant :

   a) mise à disposition d'au moins un corps moulé cru,
   b) facultativement, séchage du ou des corps moulés crus afin d'obtenir au moins un corps moulé cru au moins partiellement séché, et
   c) cuisson du corps moulé cru au moins partiellement séché, obtenu éventuellement à l'étape b), pour obtenir au moins un corps moulé en céramique grossière cuit,

**caractérisé en ce que**

la cuisson de l'au moins un corps moulé cru obtenu à l'étape c) est réalisée en exposant l'au moins un corps moulé cru à un rayonnement électromagnétique d'une fréquence comprise entre 300 MHz et 300 GHz,
dans lequel l'au moins un corps moulé cru est chauffé à l'étape c) au cours d'au moins une phase de préchauffage avec une vitesse moyenne de variation de température $\Delta T_{c)} / \Delta t_{c)}$ d'au moins 5 K/min,
dans lequel au début de l'étape c), l'au moins un corps moulé cru présente une teneur en humidité maximale d'1 % en poids par rapport au poids sec de l'au moins un corps moulé cru présent au début de l'étape c).

2. Procédé selon la revendication 1,
**caractérisé en ce que**
l'au moins une phase de réchauffement de l'étape c) est effectuée pendant une durée de 300 min maximum, de préférence une durée de 160 min maximum.

3. Procédé selon l'une des revendications précédentes,
**caractérisé en ce**
**qu'**à l'étape a), le ou les corps moulés crus fournis présentent une teneur en oxyde d'aluminium maximale de 25 % en poids, de préférence une teneur maximale de 19 % en poids, par rapport au poids sec du ou des corps moulés crus.

4. Procédé selon l'une des revendications précédentes,
**caractérisé en ce**
**qu'**à l'étape a), le ou les corps moulés crus fournis comprennent ou sont constitués d'argile non cuit et/ou de limon non cuit ainsi que, de manière facultative, d'additifs.

5. Procédé selon l'une des revendications précédentes,
**caractérisé en ce**
**qu'**au début de l'étape c), le ou les corps moulés crus présentent une teneur en humidité maximale de 0,5 % en poids, par rapport au poids sec du ou des corps moulés crus présents au début de l'étape c).

6. Procédé selon l'une des revendications précédentes,
**caractérisé en ce que**
l'étape c) comprend au moins un plateau de température, le ou les corps moulés crus et/ou les corps moulés en céramique grossière cuits sont maintenus pendant le ou les plateaux de température de l'étape c) à une température de surface choisie dans une plage comprise entre 800°C et 1600°C, de préférence entre 900°C et 1400°C.

7. Procédé selon la revendication 6,
**caractérisé en ce que**
l'au moins un plateau de température de l'étape c) est maintenu pendant une durée de 100 minutes maximum de préférence, de 75 minutes maximum si possible.

8. Procédé selon l'une des revendications précédentes,
**caractérisé en ce que**
le ou les corps moulés crus sont exposés, à l'étape c), à un rayonnement électromagnétique d'une densité de puissance moyenne d'au moins 600 W/kg, de préférence d'au moins 700 W/kg, rapportée au poids sec du ou des corps moulés crus présents au début de l'étape c).

9. Procédé selon l'une des revendications précédentes,
**caractérisé en ce que**
le procédé comprend une étape d) de refroidissement :
d) refroidissement de l'au moins un corps moulé cru et/ou du corps moulé en céramique grossière cuit, le refroidissement s'effectuant par injection de gaz tout en conservant le gaz chauffé.

10. Procédé selon la revendication 9,
**caractérisé en ce que**
l'étape d) est réalisée pendant une durée de 300 minutes maximum de préférence, de 180 minutes maximum si possible.

11. Procédé selon l'une des revendications 9 ou 10,

**caractérisé en ce**
**qu'**à l'étape d), le ou les corps moulés crus et/ou le corps moulé en céramique grossière cuit sont refroidis à une vitesse moyenne de changement de température $\Delta T_{d)} / \Delta t_{d)}$ dans au moins une phase de refroidissement d'au moins -5 K/min, de préférence, en particulier, d'au moins -8,3 K/min, de préférence d'au moins -11,1 K/min.

12. Procédé selon l'une des revendications 9 à 11
**caractérisé en ce que**
le gaz chauffé obtenu à l'étape d) est utilisé pour chauffer un autre corps moulé cru, de préférence pour le sécher au moins partiellement.

13. Procédé selon l'une des revendications précédentes,
**caractérisé en ce que**
le procédé est mis en œuvre pendant une durée de 700 min maximum, de préférence de 415 min maximum.

14. Procédé selon l'une des revendications précédentes,
**caractérisé en ce que**
le procédé comprend au moins une étape e) de revêtement de surface, l'étape e) étant réalisée après l'étape a) et/ou après l'étape facultative b) et/ou après l'étape c) :
e) application d'au moins un revêtement de surface, de préférence un revêtement de surface purificateur d'air et/ou un revêtement de surface autonettoyant, sur au moins une partie d'au moins une surface de l'au moins un corps moulé cru et/ou de l'au moins un corps moulé cru au moins partiellement séché et/ou de l'au moins un corps moulé en céramique grossière cuit.

15. Procédé selon l'une des revendications précédentes,
**caractérisé en ce que**
l'étape c) permet d'obtenir au moins un corps moulé en céramique grossière cuit sous la forme d'une tuile, d'un panneau de façade, d'un parpaing ou d'une brique.

Fig. 1a

Fig. 1b

Fig. 1c

Fig. 1d

Fig. 2

EP 4 509 483 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3918746 A1
- DE 19516205 A1
- CN 112759367
- WO 2004009513 A1
- WO 0104558 A1